# EUROPEAN PATENT SPECIFICATION

(11) **EP 4 270 245 B1**
(45) Date of publication and mention of the grant of the patent: **24.06.2026**
(21) Application number: 21922627.1
(22) Date of filing: 21.12.2021
(51) Int. Cl.: G06F 3/0484, A63F 13/213, A63F 13/48, A63F 13/533, A63F 13/5375, A63F 13/816

(54) **USER DETERMINATION METHOD, ELECTRONIC DEVICE, AND COMPUTER-READABLE STORAGE MEDIUM**
BENUTZERBESTIMMUNGSVERFAHREN, ELEKTRONISCHE VORRICHTUNG UND COMPUTERLESBARES SPEICHERMEDIUM
PROCÉDÉ DE DÉTERMINATION D'UTILISATEUR, DISPOSITIF ÉLECTRONIQUE ET SUPPORT DE STOCKAGE LISIBLE PAR ORDINATEUR

(30) Priority: 30.01.2021 CN 202110131885
(43) Date of publication of application: 01.11.2023
(73) Proprietor: Huawei Technologies Co., Ltd., Shenzhen, Guangdong 518129 (CN)
(72) Inventor: MA, Chunhui, Shenzhen, Guangdong 518129 (CN); HUANG, Lei, Shenzhen, Guangdong 518129 (CN); CHEN, Xiaohan, Shenzhen, Guangdong 518129 (CN); YU, Xindi, Shenzhen, Guangdong 518129 (CN); ZHAO, Jie, Shenzhen, Guangdong 518129 (CN)
(74) Representative: Gill Jennings & Every LLP
(86) International application number: PCT/CN2021/140199
(87) International publication number: WO 2022/161037

(56) References cited:
- CN-A- 104 516 496
- CN-A- 107 886 075
- CN-A- 108 616 712
- CN-A- 112 259 191
- CN-A- 113 590 003
- CN-A- 113 655 935
- US-A1- 2011 175 810
- US-A1- 2014 109 023
- US-A1- 2015 098 625

## Description

This application claims priority to Chinese Patent Application No. 202110131885.9, filed with the China National Intellectual Property Administration on January 30, 2021 and entitled "USER DETERMINING METHOD, ELECTRONIC DEVICE, AND COMPUTER-READABLE STORAGE MEDIUM".

### TECHNICAL FIELD

This application relates to the field of human-computer interaction technologies, and in particular, to a user determining method, an electronic device,

### BACKGROUND

With development of computer technologies, a large-screen smart electronic device (for example, a smart television) equipped with a camera can guide a user to exercise, for example, guide the user to keep fit, practice Yoga, dance, practice Tai chi, and play basketball. For example, the electronic device guides the user to keep fit. The electronic device displays a coach video for the user to imitate and learn, captures a user image by using the camera, to recognize a body pose of the user, and evaluates and guides a fitness action of the user based on the body pose.

In exercise items provided by the electronic device, some exercise items (for example, two-person rope skipping) require cooperation between a plurality of (two or more) users, and some exercise items do not require mutual cooperation between users. Currently, for an exercise item that does not require cooperation between a plurality of users, the electronic device can usually recognize and guide only one user (for example, a user 1), located in a specific area of a screen, to exercise. During exercise of the user 1, if another user (for example, a user 2) also desires to join the current exercise item, the user 2 can join only after the user 1 exits and the user 2 is in the specific area. Therefore, the electronic device is not intelligent enough to switch between the users, resulting in poor user experience.

Patent document US 2015/098625 A1 forms part of the relevant background art and discloses a system and a method of multi-user coaching. Motion-sensing cameras are applied to capture images, and a depth image stitching module is applied to perform a depth image stitching process on the captured images to expand the motion-sensing range, so as to establish a virtual environment for multi-user coaching. Each user can be coached individually by a one-to-multiple approach to improve his or her motions. Patent document US 2011/175810 A1 also forms part of the relevant background art and discloses techniques for facilitating interaction with an application in a motion capture system to allow a person to easily begin interacting without manual setup. A depth camera system tracks a person in physical space and evaluates the person's intent to engage with the application. Patent document US 2014/109023 A1 also forms part of the relevant background art and discloses techniques for assigning a gesture dictionary in a gesture-based system to a user comprise capturing data representative of a user in a physical space. In a gesture-based system, gestures may control aspects of a computing environment or application, where the gestures may be derived from a user's position or movement in a physical space.

### SUMMARY

This application provides a user determining method, an electronic device, to resolve, to some extent, a conventional-technology problem that an electronic device is not intelligent enough to determine a user when the electronic device guides the user to exercise, resulting in poor user experience.

To achieve the foregoing objective, the following technical solutions are used in this application.

According to a first aspect, an embodiment of this application provides a user determining method, applied to an electronic device. The method includes: displaying a preset first image and a captured second image in response to a first operation of a user; determining a first target user in the second image; displaying first content related to the first target user; when displaying the first content related to the first target user, determining a second target user in the second image; and when displaying the first content, displaying second content related to the second target user.

In this embodiment, the first operation of the user may be a user operation of opening an exercise item provided by the electronic device. The exercise item (for example, shoulder and neck exercise) is a sub-application set in an application that provides an exercise guidance service. One application usually includes a plurality of sub-applications. The electronic device can provide different exercise guidance content by running different sub-applications.

The first image typically includes a display icon of a specified joining action, and may also include an action of a demonstrator (for example, a coach). The second image is image information captured by the electronic device by using a camera. The second image may further include another user in addition to the first target user and the second target user.

A target user is a to-be-guided target user determined by the electronic device based on a current exercise item. For example, the current exercise item is fitness exercise, and the target user is a fitness user. Content related to the target user may be a circle indicating that a user is the target user, or may be exercise duration, a score, and calories burned by the user.

According to the user determining method provided in this embodiment of this application, after determining the first target user, the electronic device can determine the another user as the second target user, and guide a plurality of target users to exercise simultaneously. In addition, joining of the second target user does not affect the first target user. This provides better user experience.

It should be noted that the user determining method provided in this embodiment of this application is not limited to a scenario in which there are only two target users. After determining the plurality of (two or more) target users, the electronic device can further determine another target user, for example, a third target user or a fourth target user.

In some embodiments, determining the first target user in the second image includes: when a user in the second image meets a first preset condition, determining the user as the first target user. Determining the second target user in the second image includes: when the another user other than the first target user in the second image meets the first preset condition, determining the another user as the second target user. It should be understood that, in this embodiment, conditions of determining all target users are the same, and each user may become the target user by completing the first preset condition.

In some embodiments, the first preset condition is that an action of a user matches a specified joining action, and matching duration exceeds a preset time period; or an action sequence of a user matches an action sequence displayed in the first image, and matching duration exceeds a preset time period. The specified joining action is preset in the electronic device. The action sequence displayed in the first image is an action sequence performed by the demonstrator.

According to the method provided in this embodiment of this application, the user may join the current exercise item by performing the specified joining action, or may join the current exercise item by imitating an action of the demonstrator. This provides better user experience.

In some embodiments, the method further includes: when the first target user meets a second preset condition, skipping displaying the first content related to the first target user; or when the second target user meets a second preset condition, skipping displaying the second content related to the second target user.

It should be understood that, when the electronic device does not display the first content related to the first target user, the first target user exits from the current exercise item, and the electronic device no longer guides the first target user to exercise. Similarly, when the electronic device does not display the second content related to the second target user, the second target user exits from the current exercise item, and the electronic device no longer guides the second target user to exercise.

In some embodiments, the second preset condition is that an action of a target user matches a specified exit action, and matching duration exceeds a preset time period; static duration of a target user exceeds a preset time period, and an action sequence of the target user does not match the action sequence displayed in the first image; or a target user is not in the third image for more than a preset time period.

According to the method provided in this embodiment of this application, the user may exit from the current exercise item by performing the specified exit action, keeping static and not performing a demonstration action, or leaving a shooting range of the camera. A manner of exiting from the current exercise item by the user is intelligent and flexible.

In some embodiments, the method further includes: displaying query information when the first target user or the second target user meets a third preset condition, where the query information queries whether a corresponding target user exits. For example, the query information may be "Do you want to exit from a current exercise item?" It should be noted that the query information only plays a prompt role, and whether to exit from the current exercise item is specifically determined based on a selection of the target user.

In some embodiments, the third preset condition is that a matching degree between an action of a target user and the action sequence displayed in the first image is less than a threshold for more than a preset time period. When the user meets the third condition, it indicates that the target user is continuously in a poor exercise state or an exercise inactive state during exercise.

A maximum quantity of target users that can be determined by the electronic device is T, where T≥2. For example, T=3, or T=5. For a first-type exercise item that does not require cooperation between users, T=A, where A is the maximum quantity of target users that can be determined by the electronic device. For a second-type exercise item that requires cooperation between K users, T=K.

For the first-type exercise item and an electronic device with an insufficient computing capability, the maximum quantity of target user is set, so that a running speed of the electronic device can be improved to some extent.

In some embodiments, the method further includes: for the second-type exercise item, displaying first prompt information when a quantity of determined target users is P and P<T. The first prompt information prompts that target users are insufficient and the current exercise item cannot be started.

In some embodiments, the method further includes: when a quantity of determined target users is P and P<T, if detecting that Q users meet the first preset condition and Q>T-P, displaying second prompt information. The second prompt information prompts that a quantity of current target users exceeds the maximum quantity T.

In some embodiments, the method further includes: when a quantity of determined target users is P and P<T, if detecting that Q users meet the first preset condition and Q>T-P, determining a matching degree between an action of each user in the Q users and the specified joining action or a matching degree between an action sequence of each user and the action sequence displayed in the first image, determining, as a target user, a user whose matching degree ranks top T-P, and displaying content related to the target user.

According to the method provided in this embodiment, the electronic device can select an optimal user, and determine a user with a standard action pose as the target user.

In some embodiments, the method further includes: when determining a user as a target user, recording a moment of a determining operation; when a quantity of target users is determined as T, if detecting that a (T+1)^{th} user meets the first preset condition, skipping displaying related content of a user for whom the moment of the determining operation is the earliest in the T target users; determining the (T+1)^{th} user as a target user; and displaying content related to the (T+1)^{th} user.

According to the method provided in this embodiment, based on a "first in, first out" mechanism, a target user who joins first is replaced, so that each user can be provided with an exercise opportunity as much as possible. This provides better user experience.

The method further includes: when a quantity of target users is determined as T, if detecting that a (T+1)^{th} user meets the first preset condition, determining a distance between a user image of the (T+1)^{th} user in the third image and a user image of each target user; skipping displaying content related to a target user closest to the (T+1)^{th} user; determining the (T+1)^{th} user as a target user; and displaying content related to the (T+1)^{th} user.

According to the method provided in this embodiment, a non-target user can replace the target user by standing near a target user who needs to be replaced and performing a joining action. This provides better user experience.

In some embodiments, the method further includes: when a quantity of determined target users is T, if detecting that a (T+1)^{th} user meets the first preset condition, sequentially highlighting the T target users; when highlighting an i^{th} target user in the T target users, if detecting that the (T+1)^{th} user performs a selection action, skipping displaying content related to the i^{th} target user; determining the (T+1)^{th} user as a target user; and displaying content related to the (T+1)^{th} user.

According to the user determining method provided in this embodiment, a non-target user can independently select, by performing an action, a target user who needs to be replaced. This provides better user experience.

In some embodiments, the method further includes: determining whether the target user is a new user; and if the target user is a new user, displaying user switching prompt information, where the user switching prompt information includes a display icon of the specified joining action.

The new user may not be aware of a manner of user switching performed by the electronic device. Therefore, according to the method provided in this embodiment, the new user can be reminded repeatedly for a plurality of times, so that the new user can enhance the understanding of the switching manner, to improve a success rate of subsequently joining an exercise item by the user.

In some embodiments, determining whether the target user is the new user includes: capturing facial information of the target user after determining the target user; searching a facial information base of an application server for the facial information of the target user, where the facial information base includes facial information of a historical target user; and if the facial information base does not include the facial information of the target user, determining the user as a new user, and storing the facial information of the new user into the facial information base.

In some embodiments, when the first preset condition is that the action of the user matches the specified joining action, and the matching duration exceeds the preset time period, the method further includes: after determining a target user, updating a specified joining action of the target user based on an actual joining action of the target user, where the actual joining action is an action actually performed by the target user.

In some embodiments, updating the specified joining action of the target user based on the actual joining action of the target user includes: when the target user is a new user, creating a template pool of the target user based on the actual joining action of the target user, where the template pool stores M action templates generated based on the actual joining action, M<N, and N is a maximum quantity of templates allowed to be stored in the template pool; and updating the specified joining action of the target user to a clustering center of the M action templates.

According to the method provided in this embodiment, the electronic device creates a template pool for each new user, to learn an action habit of the user based on an actual joining action of the user, and update a specified joining action of the user based on the action habit of the user. This can increase a success rate of joining an exercise item by the user.

In some embodiments, updating the specified joining action of the target user based on the actual joining action of the target user includes: when the target user is not a new user, if a quantity of action templates in a template pool of the target user is less than N, storing the actual joining action into the template pool of the target user, and updating the template pool; or if a quantity of action templates in a template pool of the target user is equal to N, replacing, with the actual joining action, an action template that is at a clustering edge in the template pool of the user, and updating the template pool; and updating the specified joining action of the target user to a clustering center of all action templates in an updated template pool.

In this embodiment, for an existing user, a clustering center of a template pool is closest to an action habit of the user. As the electronic device performs cluster learning on an actual joining action of the user, the specified joining action is closer to the action habit of the user. Therefore, a joining action corresponding to the clustering center is determined as the specified joining action, so that a success rate of user switching performed by the user is improved. This improves user experience.

In some embodiments, the method further includes: when a cloud mode is enabled, displaying an exercise guidance interface, where the exercise guidance interface includes second images captured by at least two electronic devices. According to the method provided in this embodiment, even if users are far away from each other, the users can join a same exercise item simultaneously by using respective electronic devices, to exercise together.

According to a second aspect, an embodiment of this application provides an electronic device, including a memory, a processor, and a computer program that is stored in the memory and that can be run on the processor. When the processor executes the computer program, the method according to the first aspect is implemented.

According to a third aspect, an embodiment of this application provides a computer-readable storage medium. The computer-readable storage medium stores a computer program. When the computer program is executed by a processor, the method according to the first aspect is implemented.

According to a fourth aspect, an embodiment of this application provides a computer program product. When the computer program product runs on an electronic device, the electronic device is enabled to implement the method according to the first aspect.

It may be understood that, for beneficial effect of the second aspect to the fourth aspect, refer to the related descriptions in the first aspect. Details are not described herein again.

### BRIEF DESCRIPTION OF DRAWINGS

FIG. 1 is a schematic block diagram of a part of a structure of an electronic device according to an embodiment of this application;
FIG. 2A is a schematic diagram 1 of a display interface of an electronic device according to an embodiment of this application;
FIG. 2B is a schematic diagram 2 of a display interface of an electronic device according to an embodiment of this application;
FIG. 2C is a schematic diagram 3 of a display interface of an electronic device according to an embodiment of this application;
FIG. 2D is a schematic diagram 4 of a display interface of an electronic device according to an embodiment of this application;
FIG. 3 is a schematic diagram of a skeleton point of a user according to an embodiment of this application;
FIG. 4 is a flowchart of a user recognition and tracking method according to an embodiment of this application;
FIG. 5 is a schematic diagram of a user location according to an embodiment of this application;
FIG. 6A is a schematic diagram 1 of a user switching scenario according to the conventional technology;
FIG. 6B is a schematic diagram 2 of a user switching scenario according to the conventional technology;
FIG. 7 is a flowchart of a user determining method according to an embodiment of this application;
FIG. 8A is a schematic diagram 1 of a display interface displayed when a user joins fitness according to an embodiment of this application;
FIG. 8B is a schematic diagram 2 of a display interface displayed when a user joins fitness according to an embodiment of this application;
FIG. 8C is a schematic diagram 3 of a display interface displayed when a user joins fitness according to an embodiment of this application;
FIG. 8D is a schematic diagram 4 of a display interface displayed when a user joins fitness according to an embodiment of this application;
FIG. 9 is a schematic diagram of displaying user switching prompt information by an electronic device according to an embodiment of this application;
FIG. 10A is a schematic diagram 1 of a display interface displayed when a user exits from fitness according to an embodiment of this application;
FIG. 10B is a schematic diagram 2 of a display interface displayed when a user exits from fitness according to an embodiment of this application;
FIG. 10C is a schematic diagram of a display interface displayed when an electronic device queries a user whether to exit from fitness according to an embodiment of this application;
FIG. 10D is a schematic diagram 3 of a display interface displayed when a user exits from fitness according to an embodiment of this application;
FIG. 11 is a schematic diagram of a three-person fitness scenario according to an embodiment of this application;
FIG. 12A is a schematic diagram 1 of a display interface displayed when a user joins fitness according to another embodiment of this application;
FIG. 12B is a schematic diagram 2 of a display interface displayed when a user joins fitness according to another embodiment of this application;
FIG. 12C is a schematic diagram 3 of a display interface displayed when a user joins fitness according to another embodiment of this application;
FIG. 13A is a schematic diagram 1 of a display interface of user switching according to another embodiment of this application;
FIG. 13B is a schematic diagram 2 of a display interface of user switching according to another embodiment of this application;
FIG. 13C is a schematic diagram 3 of a display interface of user switching according to another embodiment of this application;
FIG. 13D is a schematic diagram of calculating a user distance according to an embodiment of this application;
FIG. 13E is a schematic diagram 4 of a display interface of user switching according to another embodiment of this application;
FIG. 14 is a schematic diagram of displaying historical exercise information according to an embodiment of this application;
FIG. 15A is a schematic diagram 1 of a display interface of an electronic device according to still another embodiment of this application;
FIG. 15B is a schematic diagram 2 of a display interface of an electronic device according to still another embodiment of this application;
FIG. 16A is a schematic diagram 3 of a display interface of an electronic device according to still another embodiment of this application;
FIG. 16B is a schematic diagram 4 of a display interface of an electronic device according to still another embodiment of this application;
FIG. 16C is a schematic diagram 5 of a display interface of an electronic device according to still another embodiment of this application;
FIG. 17 is a schematic diagram of a display interface of a shared fitness room according to an embodiment of this application;
FIG. 18 is a schematic diagram of score ranking according to an embodiment of this application;
FIG. 19 is a schematic diagram of an actual joining action of a user according to an embodiment of this application; and
FIG. 20A and FIG. 20B are a flowchart of updating a specified joining action according to an embodiment of this application.

### DESCRIPTION OF EMBODIMENTS

With development of computer technologies, a large-screen smart electronic device (for example, a smart television or a smart screen) equipped with a camera can guide a user to exercise, for example, guide the user to keep fit, practice Yoga, dance, practice Tai chi, play basketball, and play a motion sensing game.

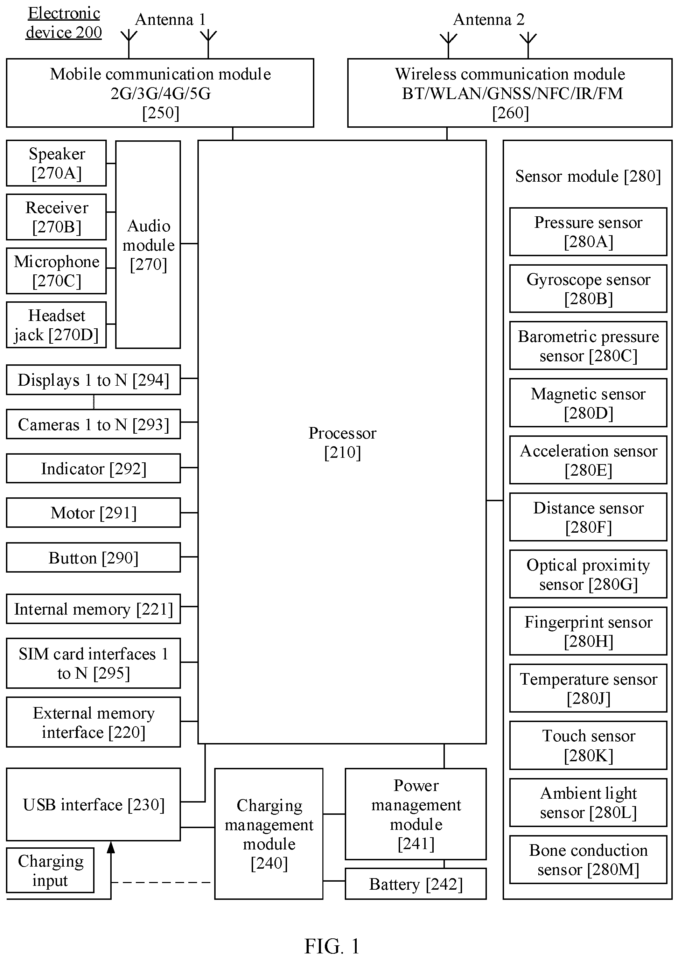

FIG. 1 is a schematic diagram of a structure of an electronic device. The electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in this embodiment of this application constitutes no specific limitation on the electronic device 200. In some other embodiments of this application, the electronic device 200 may include more or fewer components than those shown in the figure, or some components may be combined, or some components may be split, or different component arrangements may be used. The components shown in the figure may be implemented by hardware, software, or a combination of software and hardware.

For example, when the electronic device 200 is a mobile phone or a tablet, the electronic device 200 may include all components in the figure, or may include only some components in the figure.

For example, when the electronic device 200 is a large-screen device like a smart television or a smart screen, the electronic device 200 may also include all components in the figure, or may include only some components in the figure.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 200. The controller may generate an operation control signal based on instruction operation code and a time sequence signal, to complete control of instruction reading and instruction execution.

The memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210. Therefore, system efficiency is improved.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 210 may include a plurality of groups of I2C buses. The processor 210 may be coupled to the touch sensor 280K, a charger, a flash, the camera 293, and the like through different I2C bus interfaces. For example, the processor 210 may be coupled to the touch sensor 280K through the I2C interface, so that the processor 210 communicates with the touch sensor 280K through the I2C bus interface, to implement a touch function of the electronic device 200.

The I2S interface may be configured to perform audio communication. In some embodiments, the processor 210 may include a plurality of groups of I2S buses. The processor 210 may be coupled to the audio module 270 through the I2S bus, to implement communication between the processor 210 and the audio module 270. In some embodiments, the audio module 270 may send an audio signal to the wireless communication module 260 through the I2S interface.

The PCM interface may also be configured to: perform audio communication, and sample, quantize, and encode an analog signal. In some embodiments, the audio module 270 may be coupled to the wireless communication module 260 through a PCM bus interface.

In some embodiments, the audio module 270 may also transmit an audio signal to the wireless communication module 260 through the PCM interface. Both the I2S interface and the PCM interface are configured to perform audio communication.

The UART interface is a universal serial data bus, and is configured to perform asynchronous communication. The bus may be a two-way communication bus. The bus converts to-be-transmitted data between serial communication and parallel communication.

In some embodiments, the UART interface is generally configured to connect the processor 210 and the wireless communication module 260. For example, the processor 210 communicates with a Bluetooth module in the wireless communication module 260 through the UART interface, to implement a Bluetooth function. In some embodiments, the audio module 270 may transmit an audio signal to the wireless communication module 260 through the UART interface, to implement a function of playing music through a Bluetooth headset.

The MIPI interface may be configured to connect the processor 210 and a peripheral component like the display 294 or the camera 293. The MIPI interface includes a camera serial interface (camera serial interface, CSI), a display serial interface (display serial interface, DSI), and the like. In some embodiments, the processor 210 communicates with the camera 293 through the CSI interface, to implement a photographing function of the electronic device 200. The processor 210 communicates with the display 294 through the DSI interface, to implement a display function of the electronic device 200.

The GPIO interface may be configured by software. The GPIO interface may be configured as a control signal or a data signal. In some embodiments, the GPIO interface may be configured to connect the processor 210 to the camera 293, the display 294, the wireless communication module 260, the audio module 270, the sensor module 280, or the like. The GPIO interface may alternatively be configured as an I2C interface, an I2S interface, a UART interface, an MIPI interface, or the like.

The USB interface 230 is an interface that conforms to a USB standard specification, and may be specifically a mini USB interface, a micro USB interface, a USB type-C interface, or the like. The USB interface 230 may be configured to connect to a charger to charge the electronic device 200, or may be configured to transmit data between the electronic device 200 and a peripheral device, or may be configured to connect to a headset for playing audio through the headset. The interface may be further configured to connect to another electronic device like an AR device.

It may be understood that an interface connection relationship between the modules shown in this embodiment of this application is merely an example for description, and constitutes no limitation on the structure of the electronic device 200. In some other embodiments of this application, the electronic device 200 may alternatively use an interface connection manner different from an interface connection manner in this embodiment, or a combination of a plurality of interface connection manners.

The charging management module 240 is configured to receive a charging input from a charger. The charger may be a wireless charger or a wired charger. In some embodiments of wired charging, the charging management module 240 may receive a charging input of a wired charger through the USB interface 230. In some embodiments of wireless charging, the charging management module 240 may receive a wireless charging input by using a wireless charging coil of the electronic device 200. The charging management module 240 may supply power to the electronic device through the power management module 241 while charging the battery 242.

The power management module 241 is configured to connect to the battery 242, the charging management module 240, and the processor 210. The power management module 241 receives an input from the battery 242 and/or the charging management module 240, and supplies power to the processor 210, the internal memory 221, an external memory, the display 294, the camera 293, the wireless communication module 260, and the like. The power management module 241 may be further configured to monitor parameters such as a battery capacity, a battery cycle count, and a battery health status (electric leakage or impedance).

In some other embodiments, the power management module 241 may alternatively be disposed in the processor 210. In some other embodiments, the power management module 241 and the charging management module 240 may alternatively be disposed in a same component.

A wireless communication function of the electronic device 200 may be implemented through the antenna 1, the antenna 2, the mobile communication module 250, the wireless communication module 260, the modem processor, the baseband processor, and the like.

The antenna 1 and the antenna 2 are configured to: transmit and receive electromagnetic wave signals. Each antenna in the electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 250 may provide a wireless communication solution that is applied to the electronic device 200 and that includes 2G, 3G, 4G, and 5G. The mobile communication module 250 may include at least one filter, a switch, a power amplifier, a low noise amplifier (low noise amplifier, LNA), and the like. The mobile communication module 250 may receive an electromagnetic wave through the antenna 1, perform processing such as filtering or amplification on the received electromagnetic wave, and transmit a processed electromagnetic wave to the modem processor for demodulation. The mobile communication module 250 may further amplify a signal modulated by the modem processor, and convert the signal into an electromagnetic wave for radiation through the antenna 1.

In some embodiments, at least some functional modules of the mobile communication module 250 may be disposed in the processor 210. In some embodiments, at least some functional modules in the mobile communication module 250 may be disposed in a same component as at least some modules in the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 270A, the receiver 270B, or the like), or displays an image or a video on the display 294. In some embodiments, the modem processor may be an independent component. In some other embodiments, the modem processor may be independent of the processor 210, and is disposed in a same component as the mobile communication module 250 or another functional module.

The wireless communication module 260 may provide a wireless communication solution that is applied to the electronic device 200, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 260 may be one or more components integrating at least one communication processor module. The wireless communication module 260 receives an electromagnetic wave through the antenna 2, performs frequency modulation and filtering processing on the electromagnetic wave signal, and sends a processed signal to the processor 210. The wireless communication module 260 may further receive a to-be-sent signal from the processor 210, perform frequency modulation and amplification on the signal, and convert a processed signal into an electromagnetic wave through the antenna 2 for radiation.

In some embodiments, in the electronic device 200, the antenna 1 and the mobile communication module 250 are coupled, and the antenna 2 and the wireless communication module 260 are coupled, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 200 implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image and a video, for example, a teaching video and a user action picture video in this embodiment of this application. The display 294 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a Mini-LED, a Micro-LED, a Micro-OLED, a quantum dot light-emitting diode (quantum dot light-emitting diode, QLED), or the like. In some embodiments, the electronic device 200 may include one or N displays 294, where N is a positive integer greater than 1.

The electronic device 200 may implement a photographing function by using the ISP, the camera 293, the video codec, the GPU, the display 294, the application processor, and the like.

The ISP is configured to process data fed back by the camera 293. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of an image. The ISP may further optimize parameters such as exposure and a color temperature of a photographing scenario. In some embodiments, the ISP may be disposed in the camera 293.

The camera 293 is configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 200 may include one or N cameras 293, where N is a positive integer greater than 1.

The digital signal processor is configured to process a digital signal, and may process another digital signal in addition to the digital image signal. For example, when the electronic device 200 selects a frequency, the digital signal processor is configured to perform Fourier transform or the like on frequency energy.

The video codec is configured to compress or decompress a digital video. The electronic device 200 may support one or more video codecs. In this way, the electronic device 200 can play or record videos in a plurality of coding formats, for example, moving picture experts group (moving picture experts group, MPEG)-1, MPEG-2, MPEG-3, and MPEG-4.

The NPU is a neural-network (neural-network, NN) processing unit. The NPU quickly processes input information with reference to a structure of a biological neural network, for example, a transfer mode between human brain neurons, and may further continuously perform self-learning. The NPU may implement intelligent cognition of the electronic device 200 and other applications, for example, image recognition, facial recognition, speech recognition, and text understanding.

In this embodiment of this application, the NPU or another processor may be configured to perform an operation such as analysis processing on an image in a video stored in the electronic device 200.

The external memory interface 220 may be configured to connect to an external storage card, for example, a Micro SD card, to extend a storage capability of the electronic device 200. The external storage card communicates with the processor 210 through the external memory interface 220, to implement a data storage function. For example, files such as music and videos are stored in the external storage card.

The internal memory 221 may be configured to store computer-executable program code, and the computer-executable program code includes an instruction. The processor 210 executes various function applications and data processing of the electronic device 200 by running the instructions stored in the internal memory 221. The internal memory 221 may include a program storage area and a data storage area. The program storage area may store an operating system, an application required by at least one function (for example, a voice playing function or an image playing function), and the like. The data storage area may store data (for example, audio data and an address book) and the like created when the electronic device 200 is used.

In addition, the internal memory 221 may include a high-speed random access memory, or may include a nonvolatile memory, for example, at least one magnetic disk storage device, a flash memory, or a universal flash storage (universal flash storage, UFS).

The electronic device 200 may implement an audio function by using the audio module 270, the speaker 270A, the receiver 270B, the microphone 270C, the headset jack 270D, the application processor, and the like.

The audio module 270 is configured to convert digital audio information into an analog audio signal for output, and is also configured to convert an analog audio input into a digital audio signal. The audio module 270 may be further configured to: code and decode an audio signal. In some embodiments, the audio module 270 may be disposed in the processor 210, or some functional modules in the audio module 270 are disposed in the processor 210.

The speaker 270A, also referred to as a "loudspeaker", is configured to convert an audio electrical signal into a sound signal. The electronic device 200 may listen to music or answer a call in a hands-free mode over the speaker 270A. For example, the speaker may play a comparison analysis result provided in this embodiment of this application.

The receiver 270B, also referred to as an "earpiece", is configured to convert an audio electrical signal into a sound signal. When a call is answered or voice information is received by using the electronic device 200, the receiver 270B may be put close to a human ear to receive a voice.

The microphone 270C, also referred to as a "mike" or a "mic", is configured to convert a sound signal into an electrical signal. When making a call or sending voice information, a user may make a sound by moving a human mouth close to the microphone 270C to input a sound signal to the microphone 270C. At least one microphone 270C may be disposed in the electronic device 200. In some other embodiments, two microphones 270C may be disposed in the electronic device 200, to collect a sound signal and further implement a noise reduction function. In some other embodiments, three, four, or more microphones 270C may alternatively be disposed in the electronic device 200, to collect a sound signal, reduce noise, identify a sound source, implement a directional recording function, and the like.

The headset jack 270D is configured to connect to a wired headset. The headset jack 270D may be the USB interface 230, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 280A is configured to sense a pressure signal, and can convert the pressure signal into an electrical signal. In some embodiments, the pressure sensor 280A may be disposed on the display 294. There are a plurality of types of pressure sensors 280A such as a resistive pressure sensor, an inductive pressure sensor, and a capacitive pressure sensor. The capacitive pressure sensor may include at least two parallel plates made of conductive materials. When force is applied to the pressure sensor 280A, capacitance between electrodes changes. The electronic device 200 determines pressure intensity based on a change in the capacitance. When a touch operation is performed on the display 294, the electronic device 200 detects intensity of the touch operation through the pressure sensor 280A. The electronic device 200 may also calculate a touch location based on a detection signal of the pressure sensor 280A.

In some embodiments, touch operations that are performed at a same touch location but have different touch operation intensity may correspond to different operation instructions. For example, when a touch operation whose touch operation intensity is less than a first pressure threshold is performed on a Messages application icon, an instruction for viewing an SMS message is performed. When a touch operation whose touch operation intensity is greater than or equal to a first pressure threshold is performed on a Messages application icon, an instruction for creating a new SMS message is performed.

The gyroscope sensor 280B may be configured to determine a motion posture of the electronic device 200. In some embodiments, an angular velocity of the electronic device 200 around three axes (namely, axes x, y, and z) may be determined by using the gyroscope sensor 280B. The gyroscope sensor 280B may be configured to implement image stabilization during photographing. For example, when the shutter is opened, the gyroscope sensor 280B detects an angle at which the electronic device 200 jitters, obtains, through calculation based on the angle, a distance for which a lens module needs to compensate, and allows the lens to cancel the jitter of the electronic device 200 through reverse motion, to implement the image stabilization. The gyroscope sensor 280B may also be used in a navigation scenario and a somatic game scenario.

The barometric pressure sensor 280C is configured to measure barometric pressure. In some embodiments, the electronic device 200 calculates an altitude by using a barometric pressure value measured by the barometric pressure sensor 280C, to assist in positioning and navigation.

The magnetic sensor 280D includes a Hall effect sensor. The electronic device 200 may detect opening or closure of a flip leather cover by using the magnetic sensor 280D. In some embodiments, when the electronic device 200 is a clamshell phone, the electronic device 200 may detect opening and closing of a flip cover based on the magnetic sensor 280D. Further, a feature such as automatic unlocking upon opening of the flip cover is set based on a detected opening or closing state of the flip cover.

The acceleration sensor 280E may detect magnitude of accelerations in various directions (usually on three axes) of the electronic device 200. When the electronic device 200 is static, the acceleration sensor 280E may detect a magnitude and a direction of gravity. The acceleration sensor 280E may be further configured to identify a posture of the electronic device, and is used in an application such as switching between a landscape mode and a portrait mode or a pedometer.

The distance sensor 280F is configured to measure a distance. The electronic device 200 may measure the distance through infrared or laser. In some embodiments, in a shooting scenario, the electronic device 200 may perform ranging by using the distance sensor 280F to implement fast focusing.

The optical proximity sensor 280G may include, for example, a light-emitting diode (LED) and an optical detector, for example, a photodiode. The light-emitting diode may be an infrared light-emitting diode. The electronic device 200 emits infrared light by using the light emitting diode. The electronic device 200 detects infrared reflected light from a nearby object by using the photodiode. When sufficient reflected light is detected, the electronic device 200 may determine that there is an object near the electronic device 200. When insufficient reflected light is detected, the electronic device 200 may determine that there is no object near the electronic device 200. The electronic device 200 may detect, by using the optical proximity sensor 280G, that a user holds the electronic device 200 close to an ear to make a call, to automatically turn off a screen for power saving. The optical proximity sensor 280G may also be used for automatic screen unlocking and locking in a smart cover mode or a pocket mode.

The ambient light sensor 280L is configured to sense ambient light luminance. The electronic device 200 may adaptively adjust brightness of the display 294 based on the perceived ambient light brightness. The ambient light sensor 280L may also be configured to automatically adjust white balance during photographing. The ambient light sensor 280L may also cooperate with the optical proximity sensor 280G to detect whether the electronic device 200 is in a pocket to prevent an accidental touch.

The fingerprint sensor 280H is configured to collect a fingerprint. The electronic device 200 may implement fingerprint unlocking, access to an application lock, fingerprint-based photographing, fingerprint-based call answering, and the like based on features of the collected fingerprint.

The temperature sensor 280J is configured to detect a temperature. In some embodiments, the electronic device 200 executes a temperature processing policy by using the temperature detected by the temperature sensor 280J. For example, when the temperature reported by the temperature sensor 280J exceeds a threshold, the electronic device 200 lowers performance of a processor near the temperature sensor 280J, to reduce power consumption for thermal protection. In some other embodiments, when the temperature is lower than another threshold, the electronic device 200 heats the battery 242, to avoid abnormal shutdown of the electronic device 200 caused by the low temperature. In some other embodiments, when the temperature is lower than still another threshold, the electronic device 200 boosts an output voltage of the battery 242 to avoid abnormal shutdown caused by the low temperature.

The touch sensor 280K is also referred to as a "touch panel". The touch sensor 280K may be disposed in the display 294. The touch sensor 280K and the display 294 form a touchscreen, which is also referred to as a "touch screen". The touch sensor 280K is configured to detect a touch operation on or near the touch sensor 380K. The touch sensor may transfer the detected touch operation to the application processor to determine a type of the touch event. A visual output related to the touch operation may be provided on the display 294. In some other embodiments, the touch sensor 280K may alternatively be disposed on a surface of the electronic device 200, or disposed in a location different from the display 294.

The bone conduction sensor 280M may obtain a vibration signal. In some embodiments, the bone conduction sensor 280M may obtain a vibration signal of a vibration bone of a human vocal-cord part. The bone conduction sensor 280M may also come into contact with a pulse of a human body and receive a blood pressure pulse signal.

In some embodiments, the bone conduction sensor 280M may also be disposed in the headset, to obtain a bone conduction headset. The audio module 270 may parse out a voice signal based on the vibration signal of the vibration bone of the vocal part that is obtained by the bone conduction sensor 280M, to implement a voice function. The application processor may parse heart rate information based on the blood pressure beating signal obtained by the bone conduction sensor 280M, to implement a heart rate detection function.

The button 290 includes a power button, a volume button, and the like. The button 290 may be a mechanical button, or may be a touch button. The electronic device 200 may receive a button input to generate a button signal input related to user settings and function control of the electronic device 200.

The motor 291 may generate a vibration prompt. The motor 291 may be configured to provide an incoming call vibration prompt and a touch vibration feedback. For example, touch operations performed on different applications (for example, photographing and audio play) may correspond to different vibration feedback effect. The motor 291 may also generate different vibration feedback effect for touch operations performed on different areas of the display 294. Different application scenarios (for example, a time reminder, information receiving, an alarm clock, and a game) may also correspond to different vibration feedback effect. Touch vibration feedback effect may be further customized.

The indicator 292 may be an indicator light, and may be configured to indicate a charging state and a power change, or may be configured to indicate a message, a missed call, a notification, and the like.

The SIM card interface 295 is configured to connect to a SIM card. The SIM card may be inserted into the SIM card interface 295 or removed from the SIM card interface 295, to implement contact with or separation from the electronic device 200. The electronic device 200 may support one or N SIM card interfaces, where N is a positive integer greater than 1. The SIM card interface 295 may support a nano-SIM card, a micro-SIM card, a SIM card, and the like. A plurality of cards may be inserted into a same SIM card interface 295 at the same time. The plurality of cards may be of a same type or different types. The SIM card interface 295 may be compatible with different types of SIM cards. The SIM card interface 295 is also compatible with an external storage card. The electronic device 200 interacts with a network by using the SIM card, to implement functions such as conversation and data communication. In some embodiments, the electronic device 200 uses an eSIM, namely, an embedded SIM card. The eSIM card may be embedded into the electronic device 200, and cannot be separated from the electronic device 200.

The following describes examples of a user determining method and an electronic device provided in embodiments of this application by using an example in which the electronic device is a smart television and with reference to a scenario in which the electronic device guides a user to keep fit. It should be understood that the user determining method provided in this embodiment is further applicable to the foregoing other exercise scenarios based on human-computer interaction.

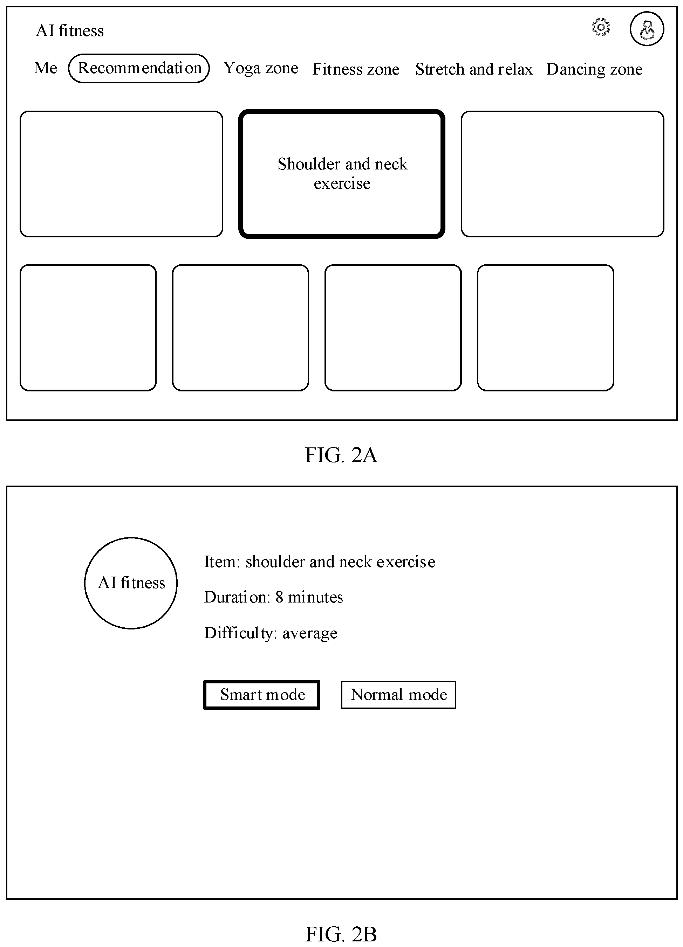

FIG. 2A is a schematic diagram 1 of a display interface of an electronic device according to an embodiment of this application. The electronic device guides the user to keep fit by running a fitness application (application, App). Depending on the app, exercise items provided by the electronic device are usually different. An artificial intelligence (artificial intelligence, AI) fitness app shown in FIG. 2A is used as an example. When the electronic device runs the AI fitness app, an exercise item provided by the electronic device includes a fitness item (for example, "Shoulder and neck exercise" and "Chest expansion exercise"), Yoga, Stretch and relax, Dancing, Tai chi, and the like. The user may select a desired exercise item, for example, "Shoulder and neck exercise" in the fitness item, according to a requirement.

The exercise item (for example, the fitness item) in this embodiment is a sub-application set in an application that provides an exercise guidance service. One application usually includes a plurality of sub-applications. The electronic device can provide different guidance content by running different sub-applications.

Optionally, the user may select the exercise item by using a remote control, or may select the exercise item through voice control. In a voice control manner, for example, the user may control, by using a first control voice (for example, "Hey Celia, Open AI Fitness"), the electronic device to open the AI fitness app, and may control, by using a second control voice "I want to take shoulder and neck exercise", the electronic device to open "Shoulder and neck exercise". A specific voice control instruction is not limited in this embodiment.

FIG. 2B is a schematic diagram 2 of a display interface of the electronic device according to an embodiment of this application. As shown in FIG. 2B, after the user selects "Shoulder and neck exercise" by using the remote control, the electronic device may display some basic information of the exercise, for example, a name "shoulder and neck exercise", duration "8 minutes", and difficulty "average". In addition, the electronic device may further display some controls, for example, a mode option "Smart mode" and "Common mode". The user controls, by operating the mode option, the electronic device to enter a corresponding exercise mode.

It should be noted that, in this embodiment, in the smart mode, the electronic device not only plays a coach video, but also captures a user image and recognizes a user action, to provide exercise guidance for the user. However, in the common mode, the electronic device only plays a coach action for the user to imitate and learn, but does not capture a user image or provide exercise guidance for the user.

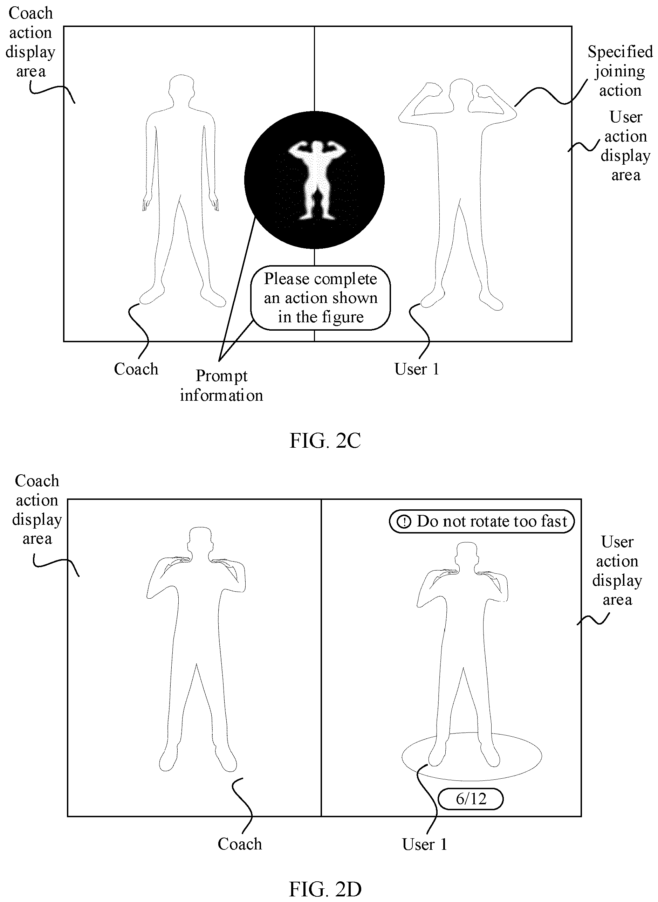

FIG. 2C is a schematic diagram 3 of a display interface of the electronic device according to an embodiment of this application. As shown in FIG. 2C, in the smart mode, a part of the user interface of the electronic device displays the coach action, and the other part displays the user action, so that the user can observe in a fitness process whether the user action is standard. In addition, because a plurality of users are likely to enter a shooting range of a camera, some users want to join fitness, and some users do not want to join fitness, the electronic device needs to recognize and determine a fitness user.

It should be noted that, in this embodiment, each person in the shooting range of the camera of the electronic device is referred to as a user, a user who has joined fitness is referred to as the fitness user, and a user who has not joined fitness is referred to as a non-fitness user. In this embodiment, a character image in a coach action display area in the electronic device is referred to as a coach or a demonstrator.

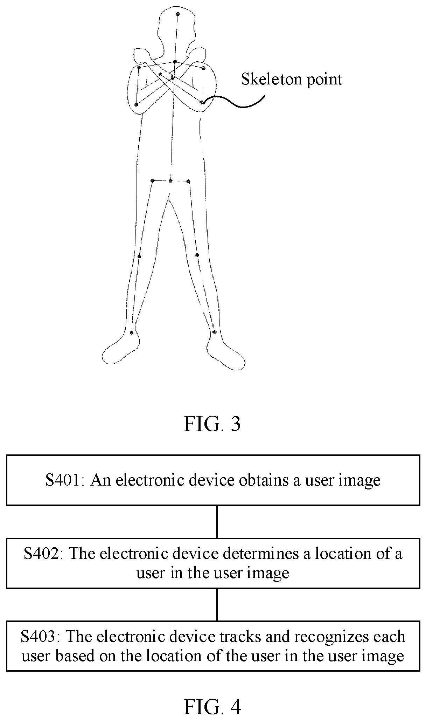

After the electronic device starts the fitness item, the electronic device captures image information in real time by using the camera, and recognizes skeleton points (for example, as shown in FIG. 3) of all persons in the image information, to determine body poses of all the persons, until the electronic device exits from fitness exercise. Therefore, in a possible implementation, after entering the fitness item, the electronic device may display prompt information to prompt the user to perform a specified joining action to join the fitness item. After displaying the prompt information, the electronic device captures and recognizes the user image, determines a user who performs the specified joining action as the fitness user, and tracks and recognizes the user, to provide exercise guidance for the user. For example, as shown in FIG. 2C, the specified joining action prompted by the electronic device is holding fists with both hands and bending upwards at two sides of the head. When detecting that the user action matches the specified joining action, the electronic device determines the user as the fitness user, and guides the user to exercise.

After the user successfully joins fitness exercise, the electronic device may display a circle at the foot of the user, to indicate that the user is the fitness user. For example, the circle may be shown in FIG. 2D. In a movement process of the user, the circle also moves with the user.

When the electronic device guides the fitness user to exercise, based on the user image captured by the camera, the electronic device determines a body pose of the user according to a human body skeleton point recognition algorithm, and then analyzes the body pose of the fitness user in combination with the coach action and an action matching algorithm, to evaluate and guide an action of the fitness user. The evaluating step includes scoring the action and determining evaluation information of the action. For example, a score may be 50, 80, or 90, and the evaluation information may be a comment, for example, "very good", "perfect", "striving", or "sorry", or may be some prompt tone. The guiding step includes correcting a problem of a current fitness action. For example, as shown in FIG. 2D, during shoulder rotation exercise of the fitness user, when detecting that the arms of the fitness user rotate too fast, the electronic device displays the prompt information like "Do not rotate too fast".

In addition, as shown in FIG. 2D, in an intelligent fitness process, the electronic device may further display a quantity of times of the current fitness action completed by the fitness user and a total quantity of times of the fitness action that needs to be completed by the fitness user. "6/12" in FIG. 2D is used as an example. A current coach action is shoulder-neck rotation exercise. "6/12" indicates that the fitness user has currently taken shoulder rotation exercise for six times, and needs to take shoulder rotation exercise for 12 times in total.

In the foregoing embodiment, when guiding the fitness user to take shoulder rotation exercise shown in FIG. 2D, the electronic device may detect a location of an elbow joint of the fitness user in real time according to a skeleton point algorithm. If the electronic device detects that a movement track of the elbow joint of the fitness user is circular, each time the circular track is formed, the electronic device considers that the fitness user completes shoulder rotation exercise for once, to collect statistics on a quantity of completion times. Further, when detecting that a rotation speed of the elbow joint of the user is greater than a rotation speed of an elbow joint of the coach, the electronic device considers that the arms rotate too fast.

FIG. 4 is a flowchart of a user recognition and tracking method according to an embodiment of this application. The method specifically includes the following content.

S401: An electronic device obtains a user image.

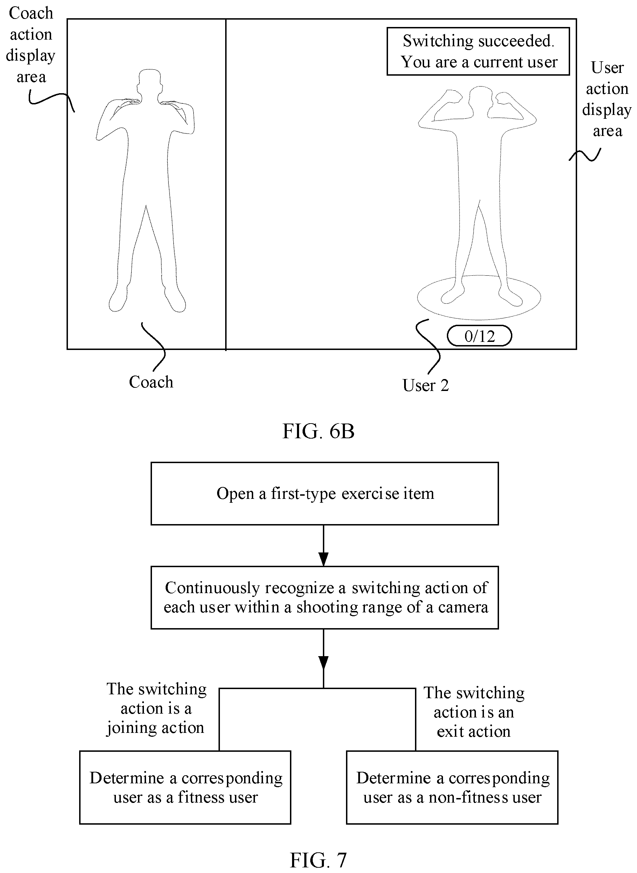

The user image is image information captured by a camera, and may include one or more users. For example, a user image shown in FIG. 7 includes only one user.

S402: The electronic device determines a location of a user in the user image.

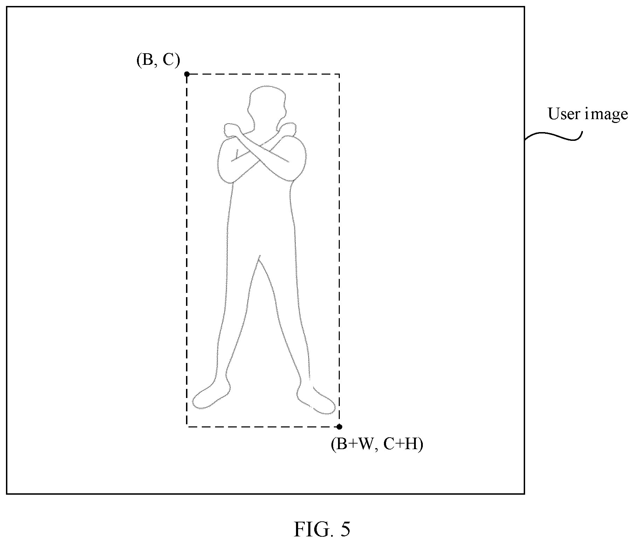

Optionally, the electronic device may determine a location (B, C, W, H) of each user in the user image according to an image recognition algorithm or a neural network algorithm. (B, C, W, H) is used to describe a location that is in the user image and that is of a rectangular area in which the user is located. For example, as shown in FIG. 5, (B, C, W, H) indicates that coordinates of an upper left vertex of the rectangular area are (B, C), and coordinates of a lower right vertex are (B+W, C+H).

After determining the location of the user in the user image, the electronic device may display related information of the user near the location, for example, account information, historical fitness information, and a fitness score. Optionally, the electronic device may display the related information of the user in an area above an upper border of the rectangular area in which the user is located.

S403: The electronic device tracks and recognizes each user based on the location of the user in the user image.

In this embodiment, the electronic device recognizes a rectangular area in which each user in each frame of user image is located, to determine a skeleton point location of each user. In consecutive D frames of user images, users for whom a difference of the skeleton point locations falls within a preset range are determined as a same user, to implement user tracking and recognition, where D≥2.

In addition, the electronic device may further recognize each frame of user image as a whole, and determine the skeleton point location of each user. In the consecutive D frames of user images, the users for whom the difference of the skeleton point locations falls within the preset range are determined as the same user, to implement user tracking and recognition, where D≥2.

It may be understood that, compared with recognizing an entire user image, recognizing only the rectangular area in which the user is located helps improve a recognition rate of the skeleton point location, and further improve a user tracking and recognition rate.

In a process of recognizing a skeleton point of the user, some skeleton points in the user image may be abnormally recognized, for example, recognition fails or a recognition result is greatly different from an adjacent frame. To prevent an abnormal skeleton point recognition result from affecting user tracking and recognition, the electronic device may ignore the abnormal skeleton point. For example, in three adjacent frames of user images, a skeleton point 1 of a user in the second frame of user image is abnormally recognized, other skeleton points of the user are normally recognized, and skeleton points in adjacent frames of user images are close in location. This also indicates that, in the three consecutive frames of user images, the users are a same user.

If the electronic device needs to recognize a user pose based on the second frame of user image and determine a matching degree between the user pose and an action like a coach action or a specified joining action, the electronic device needs to perform estimation processing on these abnormal skeleton point recognition results with reference to the adjacent frames of user images. For example, in the three consecutive frames of user images, for the same user, the electronic device may determine an intermediate location between a skeleton point 1 in the first frame of user image and a skeleton point 1 in the third frame of user image, and determine the intermediate location as a location of the abnormal skeleton point 1 in the second frame of user image.

In addition, in some other embodiments, on the basis of tracking and recognizing the user based on the skeleton point, the electronic device may further track and recognize the user according to a deep neural network algorithm and with reference to a personal feature of the user, to ensure accuracy of user tracking and recognition. The personal feature of the user includes a length of the user's hair, a facial feature of the user, a style, a color, and a texture of user's clothes, a color of user's shoes, and the like.

According to the user recognition and tracking method provided in this embodiment of this application, the electronic device can quickly and accurately track and recognize the user, to guide each user to exercise.

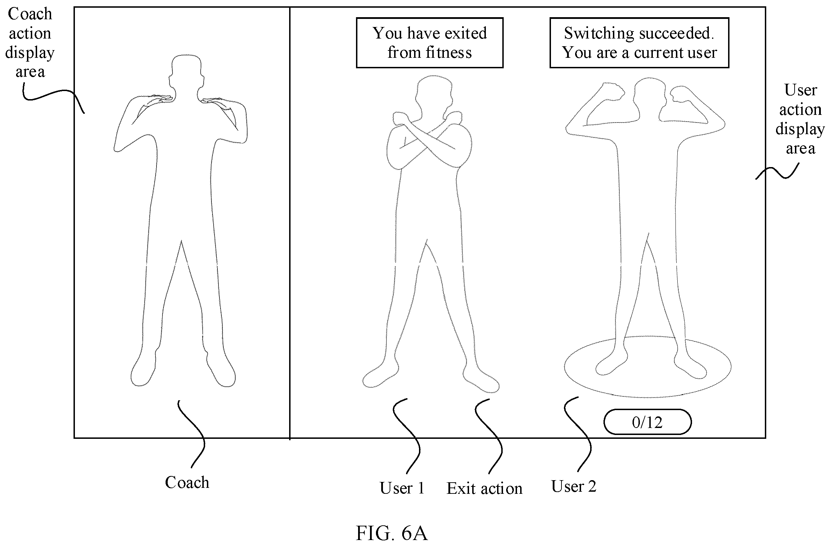

In exercise items provided by the electronic device, some exercise items (for example, two-person rope skipping and two-person dancing) require cooperation between a preset quantity of users, and some exercise items (for example, single-person shoulder and neck exercise) do not require mutual cooperation between users. Currently, for an exercise item that does not require cooperation between a plurality of users, the electronic device can usually recognize and guide only one user (for example, a user 1) to exercise. During exercise of the user 1, if another user (for example, a user 2) also wants to join a current exercise item, the user 2 can join the exercise item only after the user 1 exits. For example, the user 1 is taking shoulder and neck exercise. As shown in FIG. 6A, after the user 1 performs an exit action and successfully exits from fitness, the user 2 can join the current fitness item through a joining action. Alternatively, as shown in FIG. 6B, the user 2 can join the current fitness item through the joining action only after the user 2 leaves a shooting range of the camera, resulting in poor user experience. It can be seen that, currently, the electronic device is not intelligent enough to switch between fitness users, resulting in poor user experience.

Therefore, embodiments of this application provide a user determining method and an electronic device, to intelligently switch a fitness user. This improves user experience.

First, it should be noted that, in embodiments, an exercise item includes a first-type exercise item and a second-type exercise item. The first-type exercise item does not require mutual cooperation between users, and a user may independently exercise, for example, shoulder and neck exercise or single-person Tai chi. The second-type exercise item requires a preset quantity of users to cooperate with each other to exercise, for example, two-person rope skipping or three-person dancing.

The following specifically describes, by using an example in which the electronic device guides the user to perform the first-type exercise item, the user determining method provided in this embodiment of this application.

For the first-type exercise item, because the first-type exercise item does not require mutual cooperation between the users, a fitness user may exercise independently. Therefore, in this embodiment, when the electronic device guides the user to perform the first-type exercise item, the electronic device may identify a fitness intention of each user based on image information of the user within a shooting range of a camera, independently manage, based on the fitness intention of each user, each user to join or exit, and allow one or more fitness users to exercise simultaneously, to improve user experience.

For example, as shown in FIG. 7, after opening the first-type exercise item, the electronic device may continuously recognize a skeleton point of each user in the shooting range of the camera, and recognize a switching action of each user in real time. In this embodiment, the switching action includes a joining action and an exit action. After detecting a joining action performed by a user, the electronic device considers that the user has the fitness intention, determines the user as the fitness user, and evaluates and guides a fitness action of the user. After detecting an exit action performed by a fitness user, the electronic device considers that the user has no fitness intention, determines the user as a non-fitness user, and no longer evaluates and guides a fitness action of the user.

With reference to a user 1 and a user 2, the following describes a user switching process of the electronic device by using an example in which the first-type exercise item is single-person "Shoulder and neck exercise".
(1) A user joins fitness.

In this embodiment, the user may join fitness by performing a specified joining action or performing a coach action. That the user performs the specified joining action means that a matching degree between an action of the user and the specified joining action is greater than or equal to a first threshold and the action lasts for a preset time period. That the user performs the coach action means that a matching degree between an action of the user and the coach action synchronously displayed by the electronic device is greater than or equal to a first threshold, and matching duration exceeds a preset time period. For example, the first threshold may be 80% or 90%, and the preset time period may be 1 second, 2 seconds, or 3 seconds.

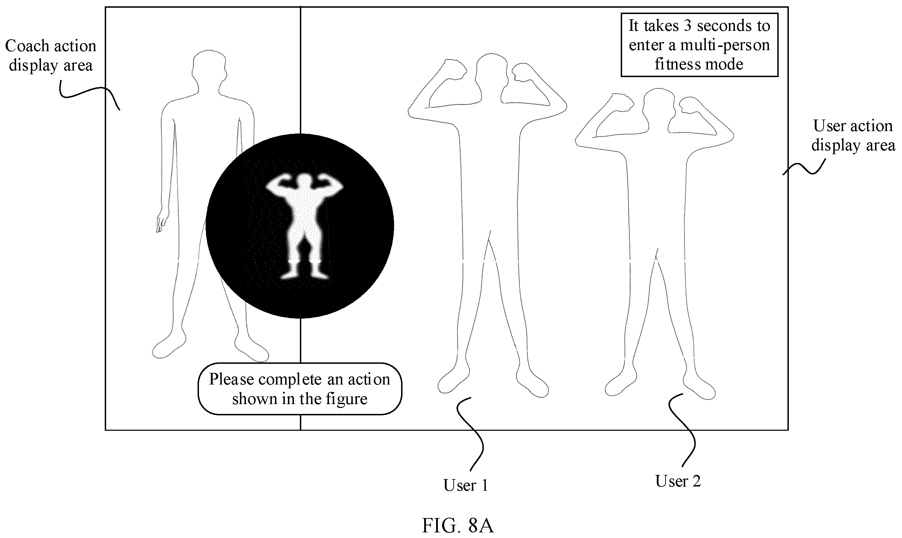

In some embodiments, as shown in FIG. 8A, after the electronic device opens a fitness item of the first-type exercise item, when the electronic device determines the fitness user, if the user 1 and the user 2 want to take "Shoulder and neck exercise" together, the user 1 and the user 2 may perform the specified joining action together based on prompt information displayed by the electronic device (for example, a schematic diagram of the specified joining action, and a prompt "Please complete an action shown in the figure"). After detecting that the user 1 and the user 2 perform the specified joining action together, the electronic device determines both the user 1 and the user 2 as fitness users, and starts to guide the user 1 and the user 2 to exercise.

Optionally, after detecting that a plurality of persons simultaneously perform the specified joining action, the electronic device may display countdown prompt information about entering a multi-person fitness mode, for example, "It takes 3 seconds to enter a multi-person fitness mode", and start a 3-second countdown.

In some other embodiments, after the user 1 first joins shoulder and neck exercise alone (refer to FIG. 2C), if the user 2 wants to join the current exercise item, the user 2 may join fitness by performing the joining action. In this embodiment, the joining action may be the specified joining action, for example, an action shown in the prompt information in FIG. 2C. Alternatively, the joining action may be a coach action currently displayed by the electronic device. To be specific, if detecting that a matching degree between an action of the user 2 and the specified joining action or the coach action is greater than the first threshold (for example, 80%), and matching duration that is greater than the first threshold exceeds the preset time period (for example, 3 seconds), the electronic device determines that the user 2 has an intention of joining fitness, and determines the user 2 as the fitness user.

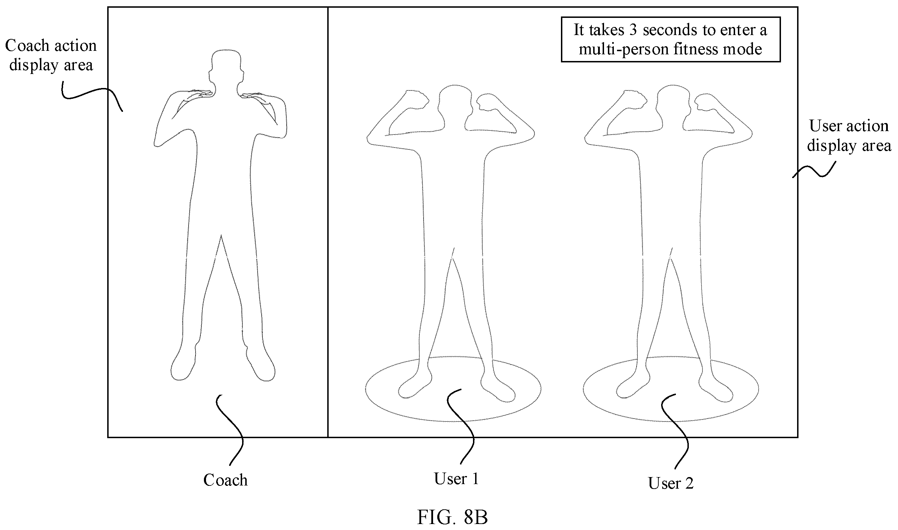

For example, when the user 1 is taking shoulder and neck exercise, if the user 2 wants to join the current exercise item, as shown in FIG. 8B, the user 2 and the user 1 may perform the specified joining action together to join fitness together. Specifically, after detecting that the user 1 and the user 2 simultaneously perform the specified joining action, the electronic device determines both the user 1 and the user 2 as fitness users. Optionally, after detecting that a plurality of persons simultaneously perform the specified joining action, the electronic device may display countdown prompt information about entering a multi-person fitness mode, for example, "It takes 3 seconds to enter a multi-person fitness mode", and start a 3-second countdown.

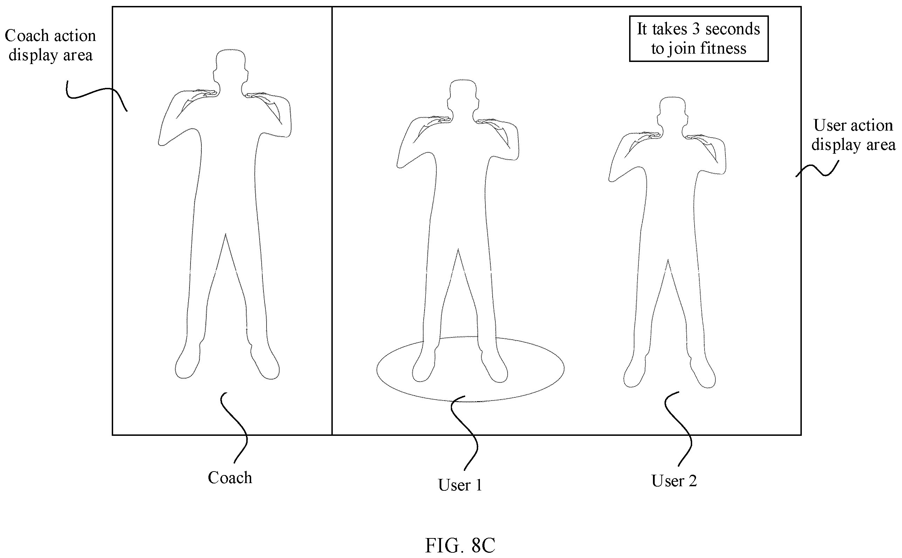

For example, as shown in FIG. 8C, when the user 1 is taking shoulder and neck exercise, if the user 2 wants to join the current exercise item, the user 2 may directly follow a coach to perform the coach action. After detecting that a matching degree between an action of the user 2 and the coach action is greater than the first threshold (for example, 80%), and duration of the action is greater than the preset time period (for example, 3 seconds), the electronic device directly determines the user 2 as the fitness user, and evaluates and guides a fitness action of the user 2. Optionally, when the user 2 performs the coach action, the electronic device may also display countdown prompt information indicating that the user 2 joins fitness, for example, "It takes 3 seconds to join fitness", and start a 3-second countdown.

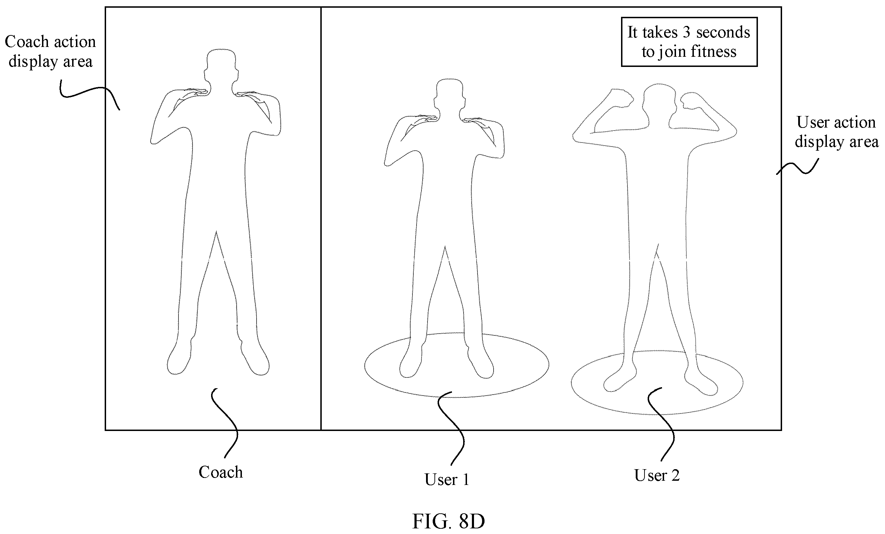

For another example, as shown in FIG. 8D, when the user 1 is taking shoulder and neck exercise, if the user 2 wants to join the current exercise item, the user 2 may join current fitness exercise by performing the specified joining action when the user 1 performs the coach action. After detecting that the user 2 performs the specified joining action, the electronic device directly determines the user 2 as the fitness user, and evaluates and guides a fitness action of the user 2. Optionally, when the user 2 performs the specified joining action, the electronic device may also display countdown prompt information indicating that the user 2 joins fitness, for example, "It takes 3 seconds to join fitness", and start a 3-second countdown.

In the embodiments shown in FIG. 8A to FIG. 8D, after a plurality of users join a current fitness item, the electronic device may display the prompt information to prompt that the electronic device has entered the multi-person fitness mode, and prompt a quantity of current fitness users. For example, the current fitness users are the user 1 and the user 2. The prompt information displayed by the display device may be "Enter a multi-person fitness mode successfully. There are two fitness users currently".

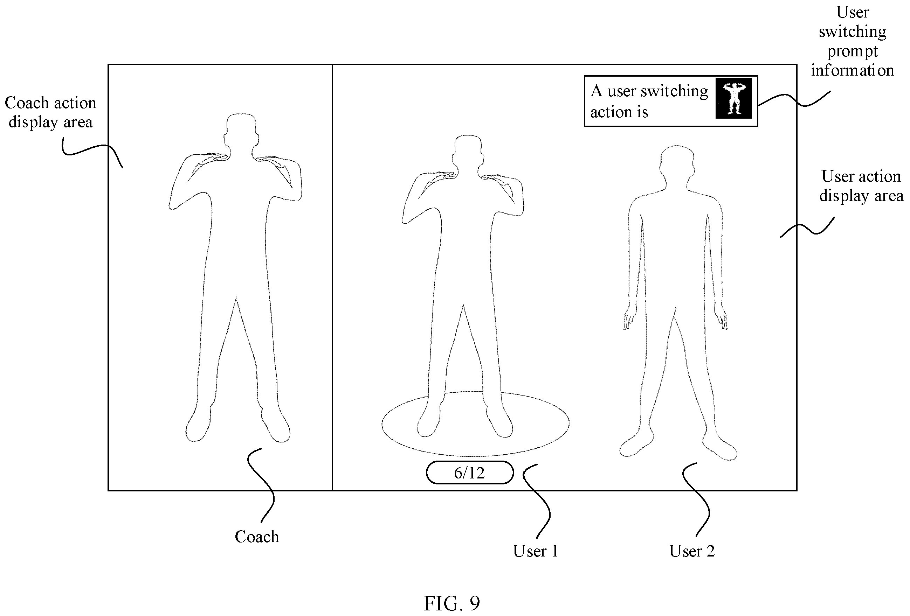

In addition, in this embodiment, the electronic device may be connected to an application server of a fitness application, and store basic information of all fitness users in the application server. The basic information includes an account name, facial information, and the like. After a user becomes the fitness user, the electronic device can query, by using the application server and based on facial information of the user, whether the user is a new user (namely, a user performing intelligent fitness for the first time). If the application server does not store the facial information of the user, the electronic device determines the user as a new user. If the user is a new user, when guiding the user to exercise, the electronic device displays user switching prompt information at a preset time interval. The prompt information includes an icon of the specified joining action that is used to prompt a manner of joining fitness to the new user. This improves fitness experience of the new user. For example, as shown in FIG. 9, if the user 2 is a new user, after the user 2 joins the current fitness item, the electronic device displays the user switching prompt information once at the preset time interval (for example, 10 seconds).

Optionally, based on the specified joining action, the electronic device may further collect statistics on a quantity of times of successfully joining fitness by the user. If the quantity of times does not exceed a preset quantity of times (for example, 5 times), the electronic device displays the user switching prompt information at intervals of a period of time (for example, 1 minute) each time after the user becomes the fitness user, so that the user joins fitness based on the prompt information. When the electronic device detects that a quantity of times that the user 2 successfully joins fitness is greater than or equal to a preset quantity of times, the electronic device no longer displays the user switching prompt information for the user.

Optionally, with gradually increased quantity of times that the user successfully joins fitness based on the specified joining action, the electronic device may gradually increase a time interval for displaying the user switching prompt information.

For the new user, the electronic device displays the user switching prompt information at the preset time interval, so that the new user can be prompted with a user switching manner. This improves user experience.

In this embodiment, after determining a plurality of fitness users, the electronic device may display a circle at the foot of each fitness user. For different fitness users, colors of the circles may be different. For example, in FIG. 8B, a circle of the user 1 is red, and a circle of the user 2 is green.

According to the user determining method provided in this embodiment, after the electronic device starts the first-type exercise item, the electronic device may determine each user with the fitness intention as the fitness user at any time, and guide these fitness users to exercise simultaneously. This provides better user experience.

(2) The user exits from fitness.

When one or more fitness users exercise guided by the electronic device, the electronic device can determine, based on image information captured by the camera, whether the current fitness user has an intention of exiting from fitness, that is, whether the fitness user performs the exit action. If the fitness user performs the exit action, the electronic device determines the fitness user as the non-fitness user, and no longer guides the fitness user to take fitness exercise. Optionally, in this embodiment, the exit action may be: leaving the shooting range of the camera, or a specified exit action (for example, crossing arms on the chest), or a condition that a matching degree between the exit action and the coach action is lower than a preset value, and the user is in a static state. That the user performs the specified exit action means that a matching degree between the action of the user and the specified exit action is greater than or equal to the first threshold and the action lasts for the preset time period.

The following describes, by using an example in which the current fitness users are the user 1 and the user 2, and the user 1 wants to exit from current fitness exercise, the user determining method provided in this embodiment.

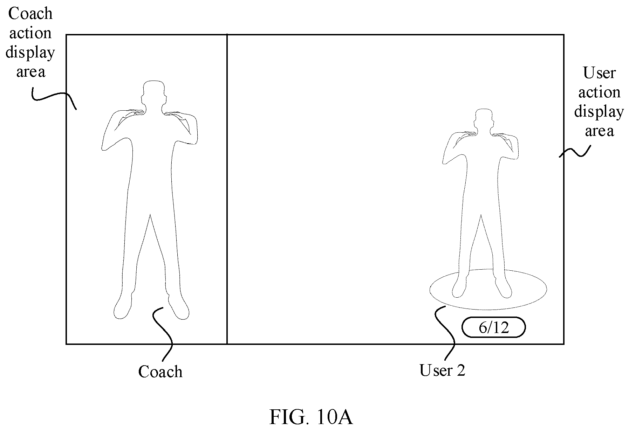

For example, as shown in FIG. 10A, when the user 1 and the user 2 exercise together, after the user 1 leaves the shooting range of the camera for the preset time period (for example, 5 seconds), the electronic device automatically cancels fitness guidance for the user 1 because the electronic device fails to recognize the user 1. It should be noted that, if the time period in which the user leaves the shooting range of the camera is less than the preset time period, for example, returns immediately after leaving only 2 seconds, the electronic device may continue to track and recognize the user, to guide the user to exercise.

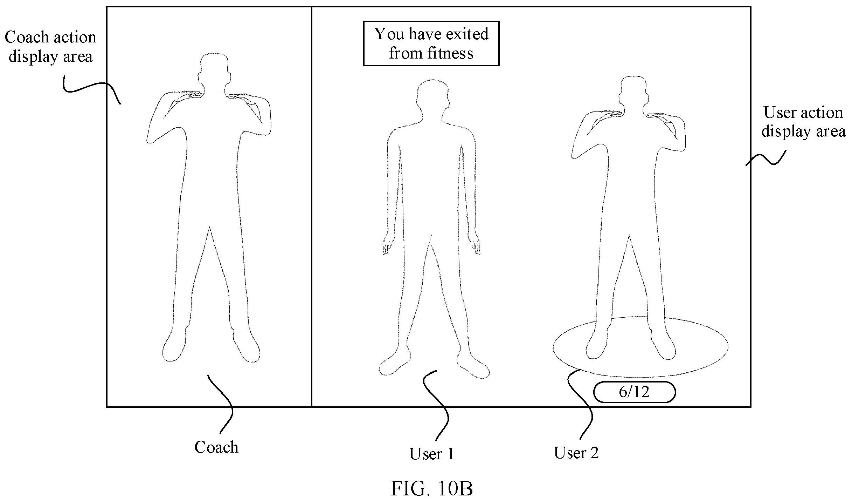

For another example, as shown in FIG. 10B, when the user 1 and the user 2 exercise together, within the preset time period (for example, within 3 seconds), if the electronic device detects that the user 1 is static, and a matching degree between a fitness action of the user 1 and the coach action is less than the preset value (for example, 60%), the electronic device determines that the user 1 has an intention of exiting from current fitness. In this case, the electronic device determines the user 1 as the non-fitness user, and no longer provides fitness guidance for the user 1. The electronic device may analyze time sequence behavior based on a key skeleton point corresponding to the current fitness item. If a standard deviation of displacements of key skeleton points within the preset time period (for example, within 3 seconds) is within a threshold range (for example, 3 centimeters), it is considered that the user is static.

It should be noted that, in this embodiment, the skeleton points include skeleton points at locations such as a shoulder, an elbow, a wrist, a head, a knee, a hip, and an ankle. For example, when a fitness item is "Shoulder and neck exercise", key skeleton points corresponding to the fitness item include skeleton points at locations such as a shoulder, an elbow, a wrist, and a head. When a fitness item is "Kicking exercise", corresponding key skeleton points include skeleton points at a knee, a crotch, and an ankle.

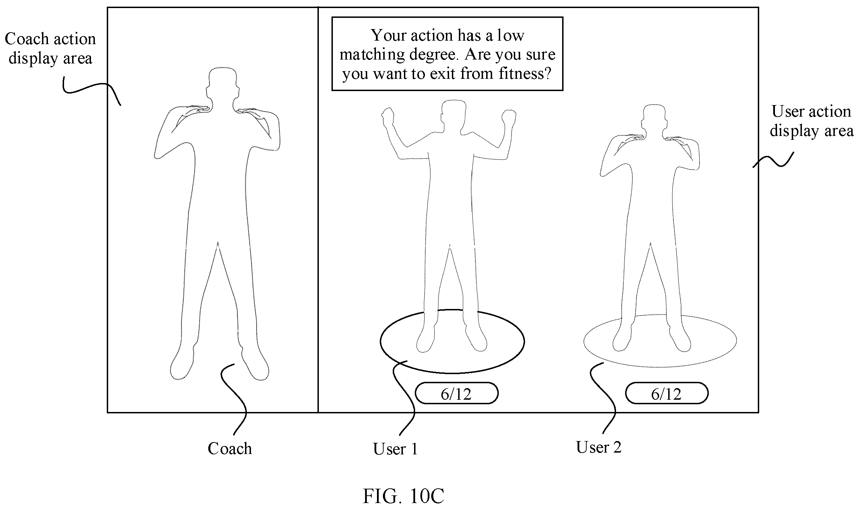

For another example, as shown in FIG. 10C, when the user 1 and the user 2 exercise together, if the electronic device detects that the user 1 is not in a static state, but within the preset time period (for example, within 10 seconds), a matching degree between a current fitness action of the user 1 and the coach action is lower than the preset value (for example, 40%), the electronic device considers that the user 1 may have an intention of exiting from current fitness. Therefore, the electronic device displays query information, to query whether the user 1 wants to exit from the current fitness item. For example, the query information may be "Your action has a low matching degree. Are you sure you want to exit from fitness?" After detecting that the user performs the specified exit action, the electronic device no longer provides fitness guidance for the user 1. Otherwise, the electronic device continues to provide fitness guidance for the user 1.

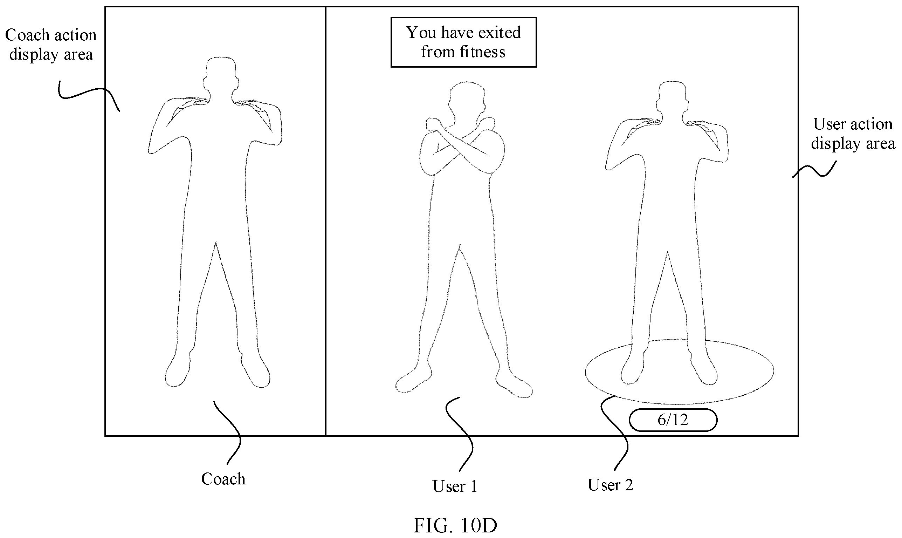

For another example, as shown in FIG. 10D, when the user 1 and the user 2 exercise together, after detecting that the user 1 performs the specified exit action, the electronic device does not provide fitness guidance for the user 1.

It should be noted that, in the embodiments shown in FIG. 10A to FIG. 10D, after the user 1 exits from fitness, the user 2 can still normally take fitness exercise without being affected by the exit action of the user 1.

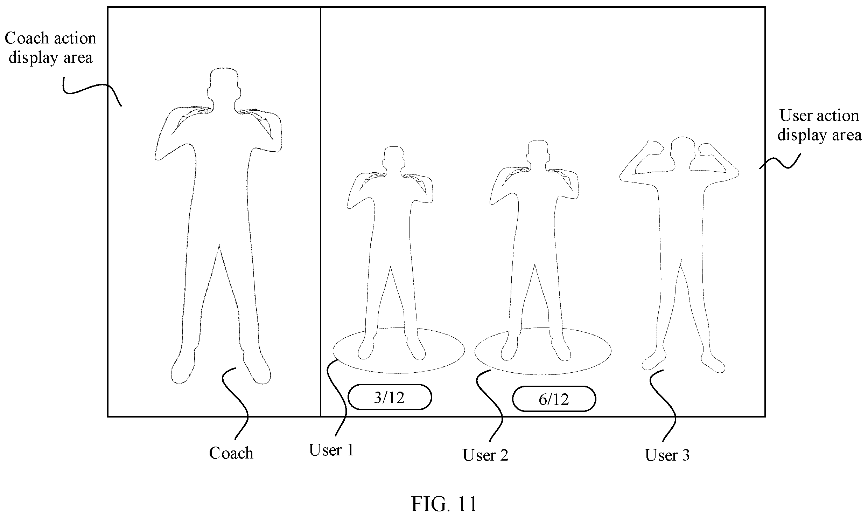

It should be noted that, in the foregoing embodiment, with reference to the first-type exercise item, the user determining method provided in this embodiment is described by using the user 1 and the user 2 as an example only, and a quantity of users is not limited to two. When there are more users in the shooting range of the camera, the electronic device may also switch a user according to the user determining method. For example, as shown in FIG. 11, when the user 1 and the user 2 exercise, a user 3 may also join or exit from the current fitness item according to the user determining method provided in this embodiment.

In conclusion, when the electronic device guides the user to perform the first-type exercise item, the electronic device can flexibly switch between the fitness users based on the fitness intention of each user in the range of the camera (that is, whether the user has performed the joining action or the exit action). The method includes: determining a user with the fitness intention as the fitness user, and guiding the user to take fitness exercise; and determining a user with an exit intention as the non-fitness user, and no longer guiding the user to take fitness exercise. This provides better user experience.

The following specifically describes, by using an example in which the electronic device guides the user to perform the second-type exercise item, the user determining method provided in this embodiment of this application.

Because the second-type exercise item requires the preset quantity of users to cooperate with each other, the electronic device not only needs to recognize the fitness user within a shooting range of a camera, but also needs to collect statistics on a quantity of fitness users. If a quantity of current fitness users does not reach the preset quantity, the electronic device displays first prompt information, to indicate that the current fitness users are insufficient. The user may join a current exercise item based on the first prompt information, and start to exercise.

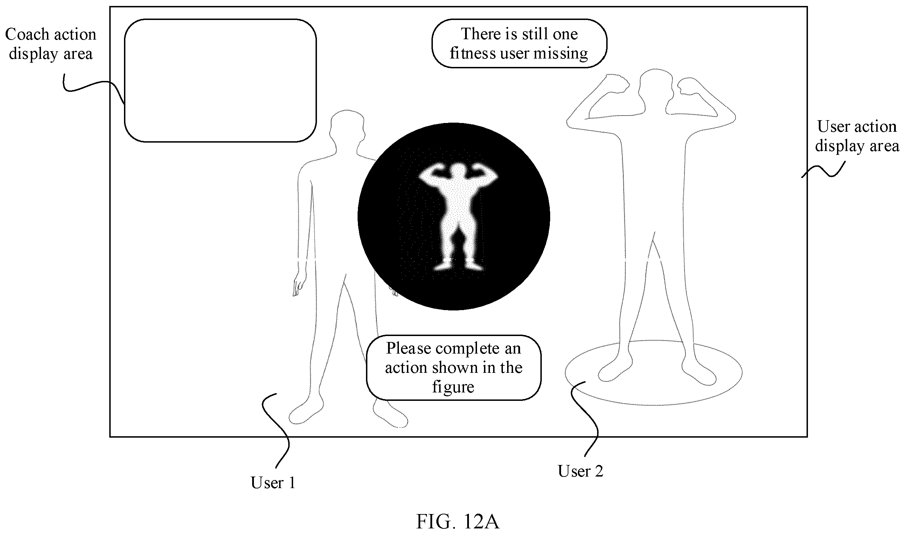

For example, the second-type exercise item is a two-person fitness item. Before starting the fitness item, the electronic device needs to determine two fitness users within a range of an image shot by the camera. For example, as shown in FIG. 12A, when a user 1 and a user 2 join the two-person fitness item, if the user 1 has joined fitness but the user 2 has not joined fitness, the quantity of fitness users does not reach a required preset quantity 2. In this case, the electronic device displays the first prompt information "There is still one fitness user missing". After both the user 1 and the user 2 join fitness, the electronic device displays prompt information "Successfully join fitness", and starts to guide the users to keep fit.

Because the quantity of fitness users of the second-type exercise item is preset, in an actual application, when the user performs a specified action to trigger fitness, there may be more than the preset quantity of users who want to join fitness. For example, in the two-person fitness item, three or more users may want to join fitness. In this case, the electronic device needs to take a specific processing measure.

In some embodiments, when the user triggers the electronic device to provide fitness guidance, if a sum of a quantity of joined users and a quantity of users currently performing a specified joining action exceeds a quantity of persons required by the fitness item, it indicates that an extra user wants to join the fitness item. In this case, the electronic device may display second prompt information, to prompt that the quantity of fitness users exceeds the preset quantity. The extra user may negotiate to join the current exercise item based on the second prompt information. This provides better user experience.

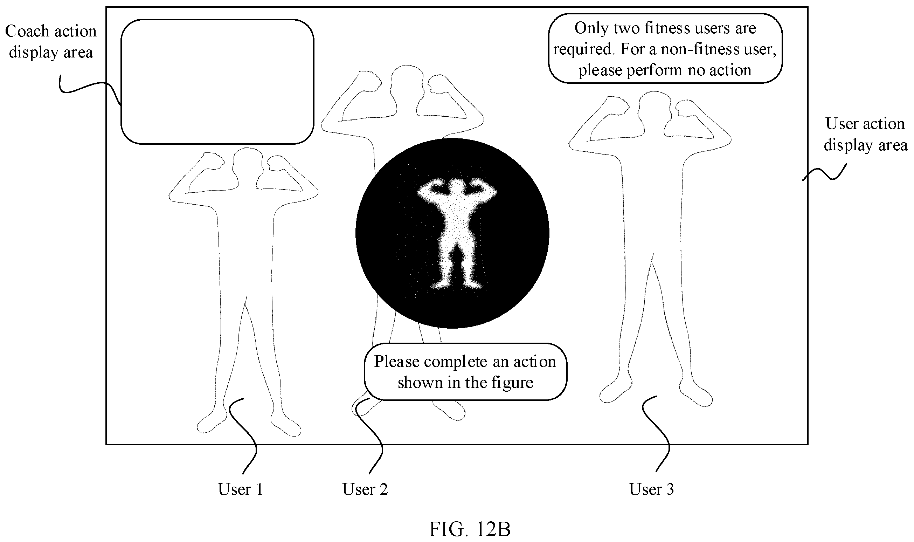

For example, as shown in FIG. 12B, when the user 1, the user 2, and a user 3 simultaneously perform the specified joining action to join two-person fitness, because there are more than two persons who request to join two-person fitness, the electronic device may display the second prompt information "Only two fitness users are required. For a non-fitness user, please perform no action". After any one of the user 1, the user 2, or the user 3 performs no specified joining action, the electronic device starts to guide the user to perform the two-person fitness item.

In some other embodiments, for example, the second-type exercise item requires mutual cooperation between K users, and K≥2. When the user triggers the electronic device to provide fitness guidance, the quantity of fitness users determined by the electronic device is P. Then, after detecting that Q users perform the specified joining action together, the electronic device determines, as the fitness user, a user corresponding to a K-P action that best matches the specified joining action, where Q>P. According to the method provided in this embodiment, a user with a standard action pose can be determined as the fitness user.

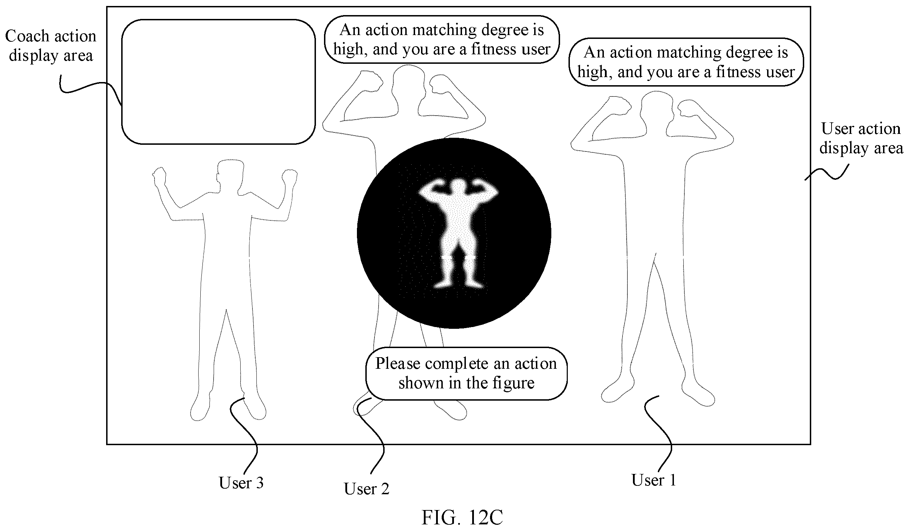

For example, as shown in FIG. 12C, currently, no fitness user has joined two-person fitness, and there are still two fitness users missing. When the electronic device detects that the user 1, the user 2, and the user 3 perform the specified joining action together to join two-person fitness, the electronic device detects that a matching degree between a joining action performed by the user 1 and the specified joining action, and a matching degree between a joining action performed by the user 2 and the specified joining action rank top 2, and a matching degree between a joining action performed by the user 3 and the specified joining action ranks the last one. Therefore, the electronic device determines the user 1 and the user 2 as the fitness users, and respectively displays prompt information on images of the user 1 and the user 2, to prompt that the user 1 and the user 2 become the fitness users. For example, the prompt information may be "An action matching degree is high, and you are a fitness user". Subsequently, the electronic device starts to guide the user 1 and the user 2 to perform two-person fitness.

After both the user 1 and the user 2 join fitness, if another user (for example, the user 3) wants to replace the user 1 to join fitness, any one of the following manners may be used to join fitness.

Manner 1: Join fitness after an existing fitness user exits.

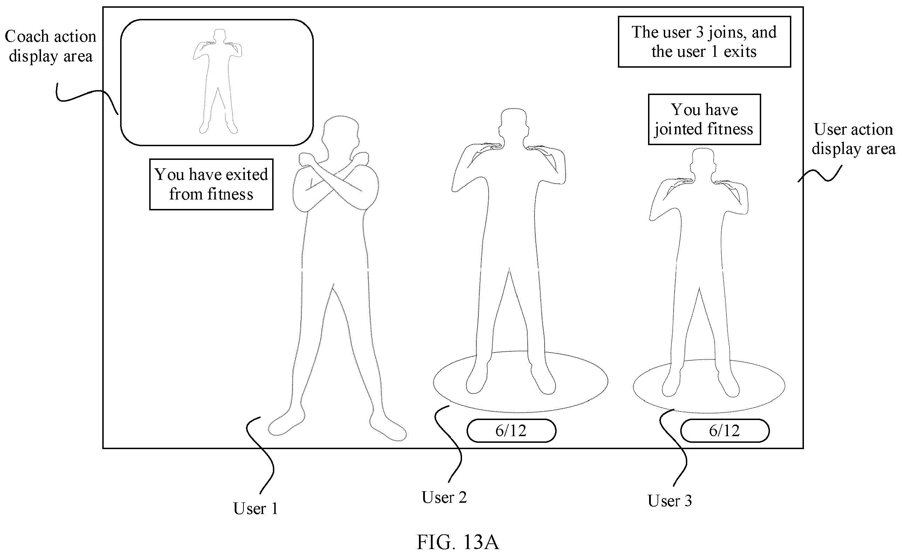

As shown in FIG. 13A, in a fitness process of the user 1 and the user 2, if the user 1 performs an exit action to exit from current fitness, the user 3 may join current fitness by performing the joining action, so that the user 3 replaces the user 1 to perform two-person fitness. It should be noted that, in this embodiment, the exiting user (namely, the user 1) may exit from current fitness exercise in any exit manner shown in FIG. 10A, FIG. 10B, or FIG. 10D; and the joining user (namely, the user 3) may join current fitness exercise in any joining manner shown in FIG. 8A to FIG. 8D.

Manner 2: Preempt to become the fitness user in an order of joining fitness

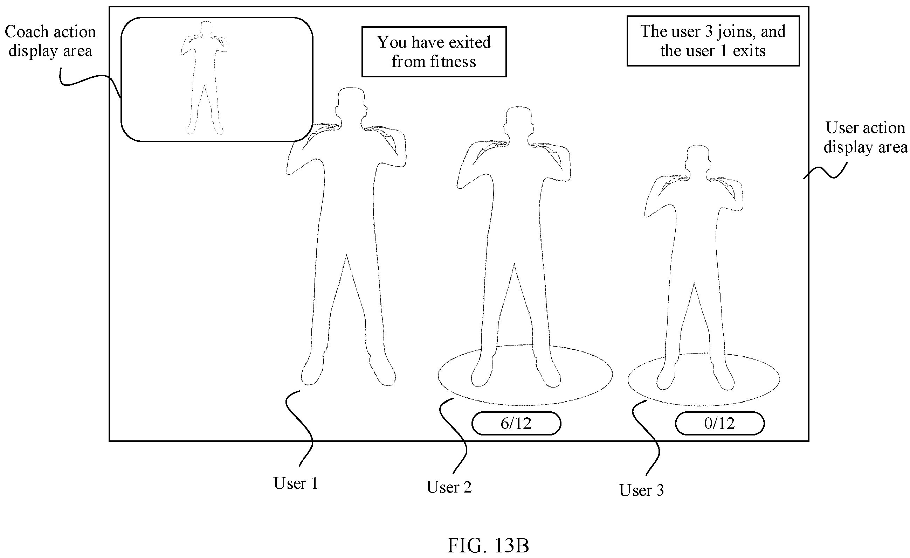

As shown in FIG. 13B, in a fitness process of the user 1 and the user 2, the user 3 may join current fitness exercise by performing the joining action. The electronic device records joining time of each fitness user. After the user 3 successfully joins, the electronic device automatically controls a fitness user (for example, the user 1) who first joins fitness to exit from fitness. In this embodiment, the joining user (namely, the user 3) may join current fitness exercise in any joining manner shown in FIG. 8A to FIG. 8D. After the user 3 joins fitness, even if the user 1 is currently taking exercise and a fitness action has a high matching degree, the user 1 is determined as a non-fitness user.

Optionally, when the user 3 joins current fitness exercise by performing the joining action, if fitness duration of a user (for example, the user 1) who first joins exceeds a preset time period (for example, 5 minutes), the electronic device determines the user 3 as the fitness user. Otherwise, the electronic device does not determine the user 3 as the fitness user. According to this method, exercise time of each user can be ensured as much as possible.

In the method provided in this embodiment, according to a "first in, first out" mechanism, an exercise opportunity can be provided for each user with a fitness intention as much as possible. This provides better user experience.

Manner 3: Replace a nearest fitness user.

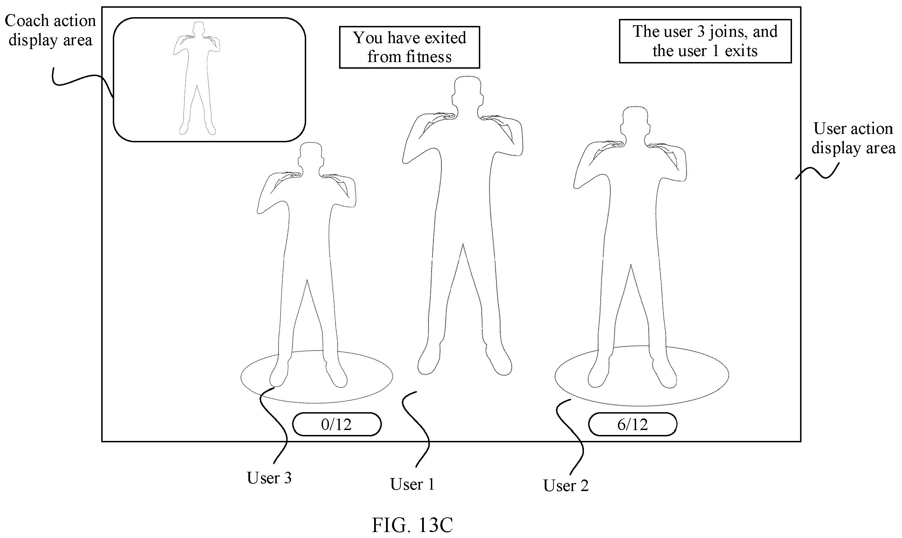

As shown in FIG. 13C, in a fitness process of the user 1 and the user 2, when the user 3 wants to join current fitness exercise, the user 3 may select a fitness user (for example, the user 1) who needs to be replaced, stand close to the user 1, and perform the specified joining action or a coach action. After detecting a fitness intention of the user 3, the electronic device separately determines a distance between the user 3 and other fitness users (namely, the user 1 and the user 2), switches a nearest fitness user to a non-fitness user, and determines the user 3 as the fitness user. For example, the electronic device detects that the fitness user closest to the user 3 is the user 1. The electronic device switches the user 1 to a non-fitness user, and switches the user 3 to a fitness user.

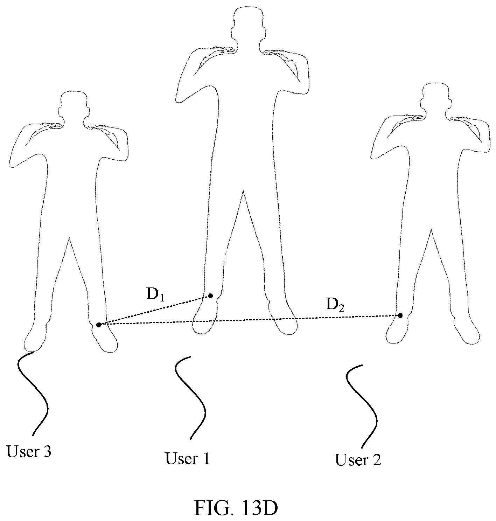

In an example, because a location relationship of users in a user image is the same as an actual location relationship of the users, the electronic device may represent an actual far-near relationship of the users to some extent based on a far-near relationship of the users in the user image. Optionally, in the user image, the electronic device may determine a nearest distance between ankles of two users as a distance between the two users. In view of this, as shown in FIG. 13D, because a left ankle of the user 3 is closest to a right ankle of the user 1, a distance D₁ between the left ankle of the user 3 and the right ankle of the user 1 is a distance between the user 3 and the user 1. Similarly, a distance D₂ between the left ankle of the user 3 and a right ankle of the user 2 is a distance between the user 3 and the user 2. Because D₁ is less than D₂, the electronic device determines that the user 1 is closest to the user 3, and replaces the user 1 with the user 3, that is, switches the user 1 to the non-fitness user, and switches the user 3 to the fitness user.

According to the method provided in this embodiment, the non-fitness user can replace the fitness user by standing near the fitness user who needs to be replaced and performing the joining action. This provides better user experience.

Manner 4: A user actively selects a fitness user who needs to be replaced.

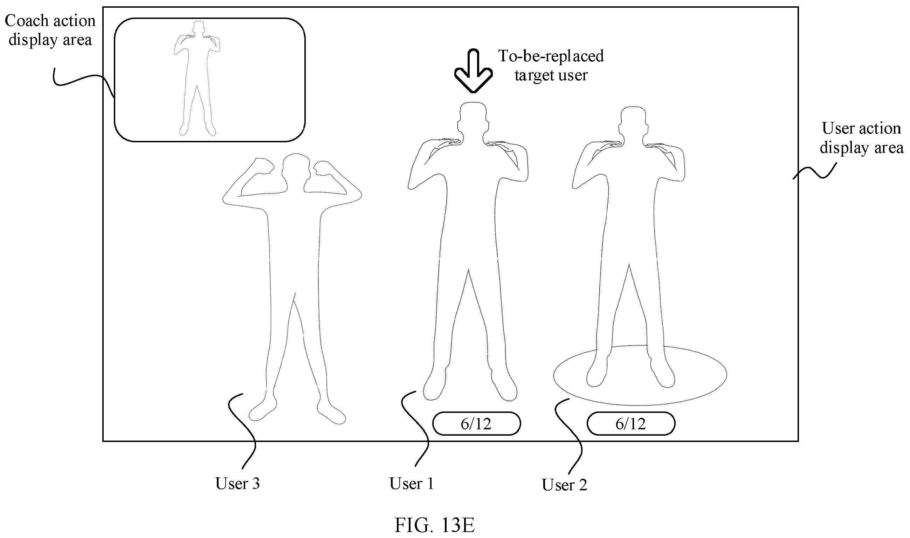

As shown in FIG. 13E, in a fitness process of the user 1 and the user 2, the user 3 may control the electronic device to enter a user replacement mode by performing the specified joining action. In the user replacement mode, the electronic device sequentially highlights images of the user 1 and the user 2. Highlighting a user image includes flashing the user image, displaying indication information above the user image (for example, an arrow and prompt text "To-be-replaced target user" in FIG. 13E), or the like. When the user 3 wants to replace the user 1, the electronic device highlights the user 1, and then the user 3 can become the fitness user by performing a selection action and replace the user 3. When the user 3 wants to replace the user 2, the electronic device highlights the user 2, and then the user 3 can become the fitness user by performing a selection action and replace the user 2. The selection action may be a specified action, or may be an operation of performing no specified joining action currently performed by the user.

According to the method provided in this embodiment, the non-fitness user can independently select the fitness user who needs to be replaced. This also provides better user experience.

In Manner 1 to Manner 4, after the user 1 exits and the user 3 joins, the electronic device may display prompt information to prompt that user switching succeeds. For example, the prompt information may be "The user 1 exits, and the user 3 joins". A specific form of the prompt information is not limited in this embodiment.

In conclusion, when the electronic device guides the user to perform the second-type exercise item, the electronic device can flexibly determine the fitness user. This helps improve user experience.

In addition, for the first-type exercise item, according to the method provided in this embodiment of this application, each user with the fitness intention can be determined as the fitness user and guided to exercise. However, in an actual application, a processing capability of some electronic devices may be poor. For an electronic device with a poor processor capability, a quantity of fitness users who can actually be guided by the electronic device is limited. Therefore, for the first-type exercise item, the electronic device may preset a maximum quantity A of fitness users based on a computing processing capability of the electronic device, for example, A=5.

Different from the second-type exercise item that requires K fitness users to be determined before exercise guidance can be started, for the first-type exercise item, after the first-type exercise item is started, an electronic device for which the maximum quantity A of persons is set can provide fitness guidance as long as one fitness user is determined. In the guiding process, the electronic device may continue to recognize the user image, and determine a user with the fitness intention as the fitness user at any time, or switch a fitness user without the fitness intention to the non-fitness user.

In some embodiments, for the first-type exercise item, when the electronic device guides P fitness users to exercise (P<A), and a quantity of non-fitness users with the fitness intention in the user image is Q and Q≤A-P, the electronic device determines all the Q non-fitness users as the fitness users.

For example, A=5, P=2, and Q=2. A maximum quantity of persons for the first-type exercise item is 5. When the electronic device guides two fitness users to exercise, there are still two non-fitness users in the user image who have the fitness intention. In this case, the electronic device may determine both the two non-fitness users as the fitness users.

In some other embodiments, for the first-type exercise item, when the electronic device guides P fitness users to exercise (P<A), a quantity of non-fitness users with the fitness intention in the user image is Q, and Q>A-P, the electronic device may determine A-P users in the Q users according to the method shown in FIG. 12B or FIG. 12C.

For example, A=5, P=2, and Q=4. A maximum quantity of persons for the first-type exercise item is 5. When the electronic device guides two fitness users to exercise, there are still four non-fitness users in the user image who have the fitness intention. In this case, the electronic device may prompt, according to the method shown in FIG. 12B, that excessive users request to join, and request some users to stop performing the joining action. Alternatively, the electronic device may determine, according to the method shown in FIG. 12C, a matching degree between an action of each of the four non-fitness users and the specified joining action or the coach action, and determine top three users with highest matching degrees as the fitness users.

In some other embodiments, for the first-type exercise item, when the electronic device guides A fitness users to exercise, and a quantity of non-fitness users with the fitness intention in the user image is Q, each of the Q fitness users may perform user switching in any one of Manner 1 to Manner 4, join the first-type exercise item, and become the fitness user.

For example, A=5, P=5, and Q=2. A maximum quantity of persons in the first-type exercise item is 5. When the electronic device guides the five fitness users to exercise, there are still two non-fitness users in the user image who have the fitness intention. In this case, the electronic device may allow the two users to sequentially join the first-type exercise item according to any method in Manner 1 to Manner 4, so that the two users become the fitness user.

When the electronic device guides the fitness user to perform the first-type exercise item or the second-type exercise item, the electronic device may display historical exercise information of the fitness user. The historical exercise information may be historical exercise information generated when the user participates in a currently running exercise item, or may be historical exercise information of all exercise items in which the user participates on a current day. The historical exercise information includes fitness duration, a fitness score, calories burned, and the like.

In some embodiments, for the first-type exercise item or the second-type exercise item, when guiding the user to keep fit, the electronic device may display historical fitness information of each fitness user on a screen, and continuously update the historical fitness information based on an exercise status of the user.

In some other embodiments, for the first-type exercise item or the second-type exercise item, when the electronic device guides the user to keep fit, a case in which a fitness user exits from fitness and then joins the fitness item may occur. After the electronic device detects that an exiting fitness user joins the current fitness item again, the electronic device may display historical exercise information about joining the current fitness item by the fitness user.

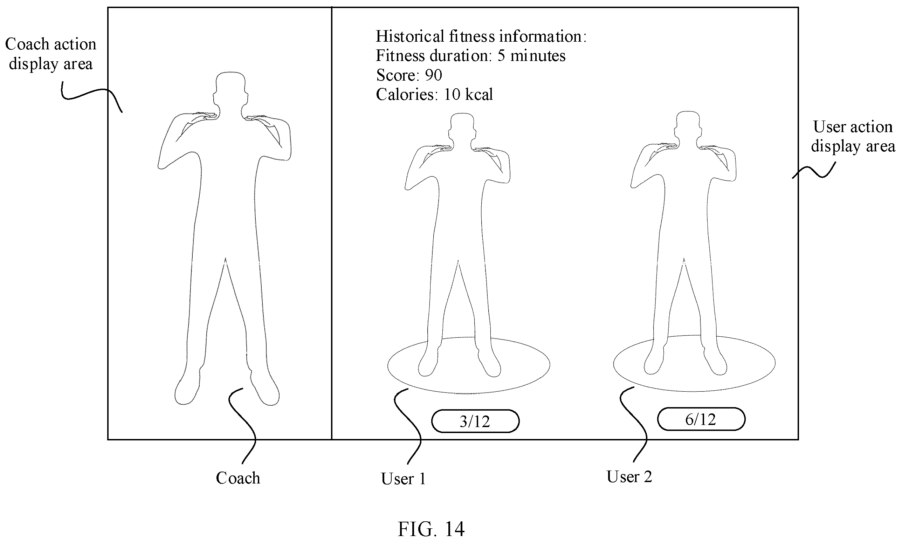

For example, as shown in FIG. 14, during "Shoulder and neck exercise" of the user 1, if the electronic device detects that the user 1 joins the exercise item after exiting from current shoulder and neck exercise, the electronic device displays historical exercise information of the exercise item performed by the user: fitness duration: 5 minutes, score: 90, calories: 10 kcal.

In some other embodiments, for the first-type exercise item or the second-type exercise item, after the user exits from an exercise item currently performed on the electronic device, the electronic device may display, on a screen, historical exercise information about joining the exercise item by the user.

In some other embodiments, for some second-type exercise items that need to be executed by a plurality of fitness users in turn, for example, a "Relay running" exercise item, the electronic device may accumulate and collect statistics on historical exercise information of each fitness user. For example, when the user 1 performs the "Relay running" exercise item, the electronic device displays historical exercise information of the user 1 in real time. After the user 2 replaces the user 1, the electronic device continues to collect statistics on exercise information of the user 2 based on the historical exercise information of the user 1, as common historical exercise information of all users participating in the exercise item.

Based on the historical exercise information, the user may know an exercise status of the user, for example, historical exercise duration and calories burned, to help the user properly arrange an exercise plan.

An embodiment of this application further provides a cloud fitness exercise mode, that is, different users simultaneously participate in a same fitness item by using a plurality of electronic devices. The following describes specific content of cloud fitness with reference to the accompanying drawings.

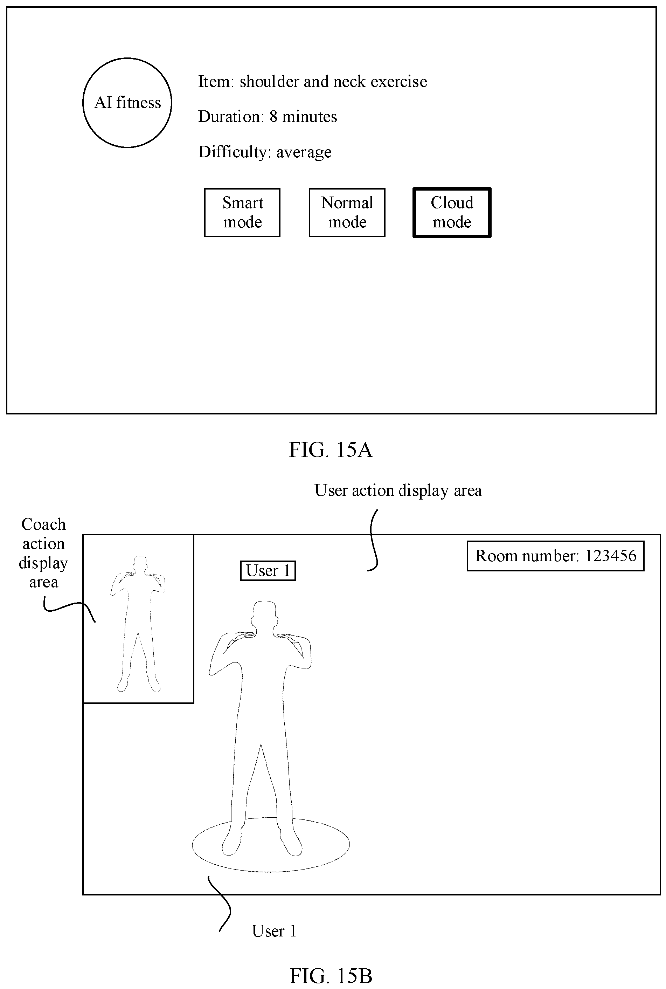

In a possible implementation, for example, the electronic device guides the user to perform shoulder and neck exercise in the first-type exercise item. As shown in FIG. 15A, the user 1 may select a cloud mode on a mode selection interface of "Shoulder and neck exercise" to take shoulder and neck exercise in the cloud mode. After the user 1 starts to exercise in the cloud mode, as shown in an exercise guidance interface shown in FIG. 15B, the electronic device creates a fitness room that has a uniquely determined room number (for example, 123456). According to the room number, other users can join an exercise item currently taken by user 1.

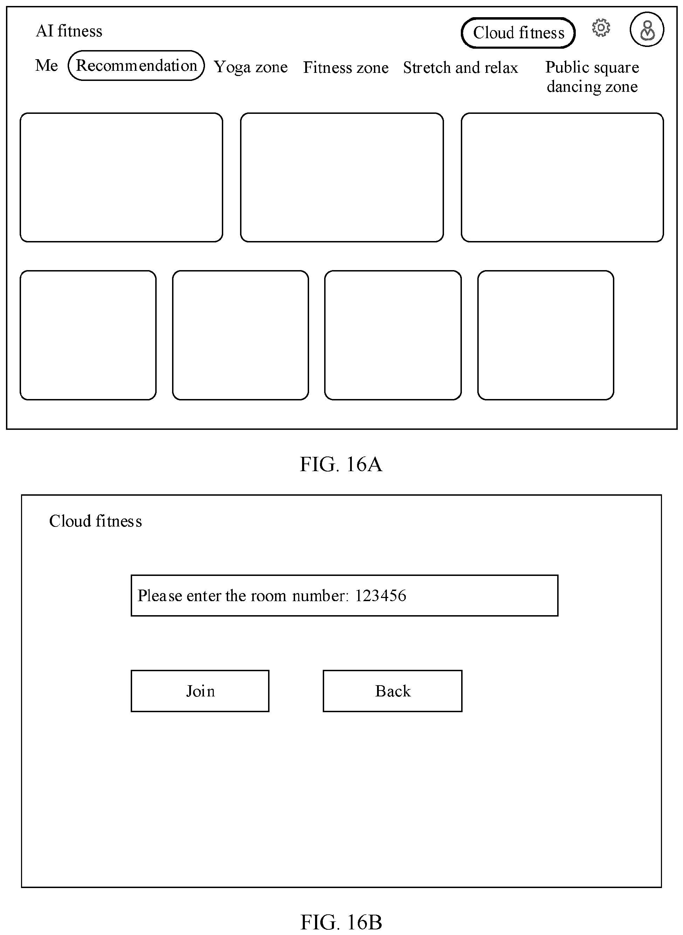

For example, the user 2 joins the current exercise item of the user 1. As shown in FIG. 16A, the user 2 may enter a cloud fitness joining page by operating a "Cloud fitness" icon on a home screen of an AI fitness application. As shown in FIG. 16B, the cloud fitness joining page may include a room number input area, and a "Join" icon and a "Return" icon. After the user 2 inputs a room number on the cloud fitness joining interface and operates the "Join" icon, the user 2 enters a fitness room created by the user 1, and performs cloud fitness together with the user 1.

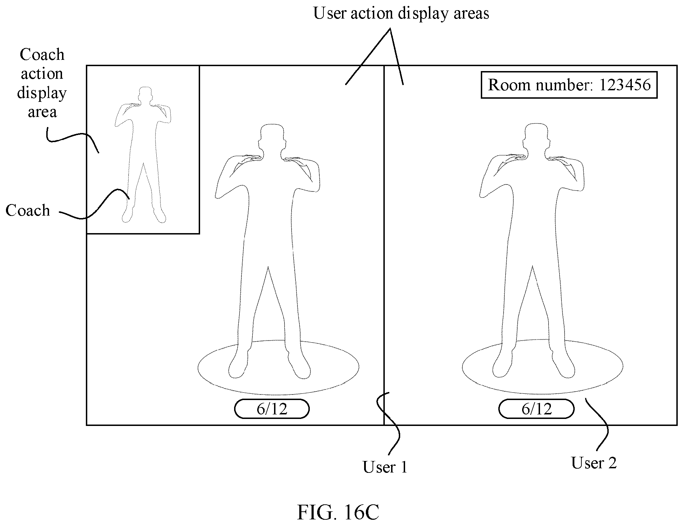

After the user 2 enters the fitness room created by the user 1, as shown in FIG. 16C, both an electronic device of the user 1 and an electronic device of the user 2 may simultaneously display an exercise guidance interface. The exercise guidance interface includes the coach action, image information of the user 1, and image information of the user 2. In addition, the user 1 and the user 2 may also perform voice communication.

In another possible implementation, the user may reserve, by using a fitness application on the electronic device, another user to perform cloud fitness. Reservation information of cloud fitness includes a fitness item name, fitness duration, a fitness user account, fitness start time, and a fitness joining link. After the reservation is successful, the fitness application notifies a reservation information account to a corresponding fitness user. At the agreed fitness time, the user can join the reserved fitness item based on the fitness joining link.

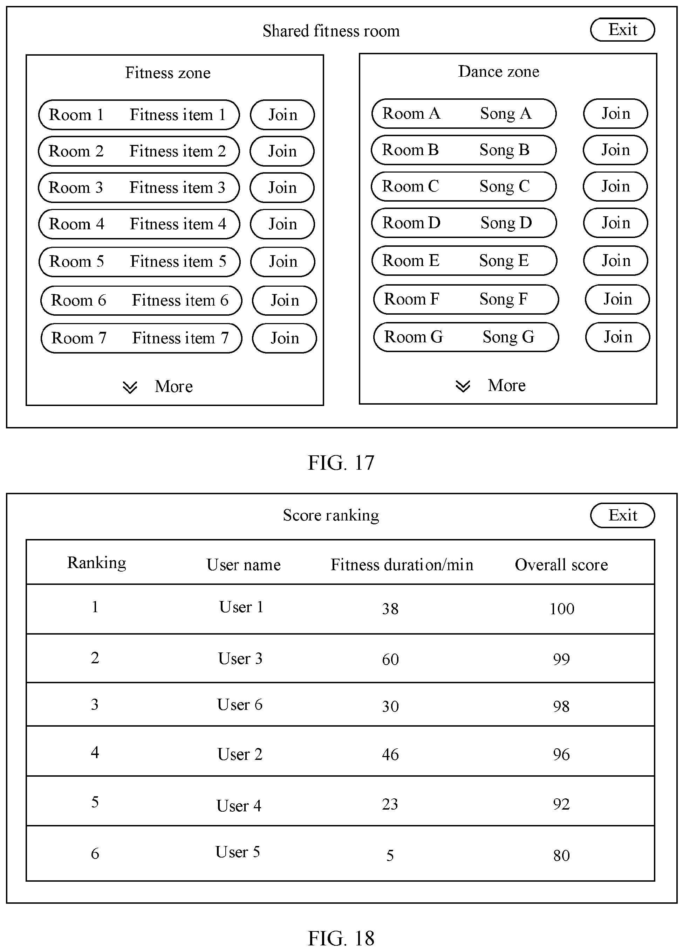

In some other possible implementations, some shared fitness rooms may be preset in the fitness application, and any fitness user may enter the fitness room, and participate in an exercise item provided by the fitness room together with another network fitness user. For example, refer to a shared fitness room interface shown in FIG. 17. The electronic device provided in this embodiment may set different exercise zones for different types of exercise items, for example, a fitness zone, a public square dancing zone, a Yoga zone, and a Tai chi zone. The user may enter a corresponding room to exercise. For example, the user performs a "Fitness item 1". The user may enter a room 1 by operating a "Join" icon corresponding to the room 1 in the fitness zone, and then take "Fitness item 1" exercise.

In this embodiment, after the user enters a shared fitness room, the electronic device may not capture image information of the user, to avoid disclosing privacy of the user. Alternatively, the electronic device may capture image information of the user to provide fitness guidance for the user, and share fitness information of the fitness user in the room (for example, fitness duration, a score, and calories burned) to the fitness room, but do not share the image information of the fitness user, to avoid disclosing user privacy.

In addition, in the shared fitness room, the user can also view rankings of all users in the fitness room. For example, the ranking may be a score ranking determined based on a fitness action score of the user (for example, as shown in FIG. 18), or may be a duration ranking determined based on fitness duration of the user. A specific type of the ranking is not limited in this embodiment.

It should be noted that, during cloud fitness (including the first-type exercise item and the second-type exercise item) of the user, the electronic device may also switch a fitness user within the shooting range of the camera of the electronic device according to the user determining method provided in this embodiment of this application.

According to the cloud fitness technical solution provided in this embodiment of this application, the user can exercise together with another user without being limited by a distance. This helps improve enthusiasm of the user for fitness and provides better user experience.

When the user switches the fitness user by performing the specified joining action (refer to FIG. 2C, FIG. 8A, and FIG. 12A), because the user has different understanding of the specified joining action, the specified joining action (referred to as an actual joining action in this embodiment) actually performed by the user may be quite different from the specified j oining action.

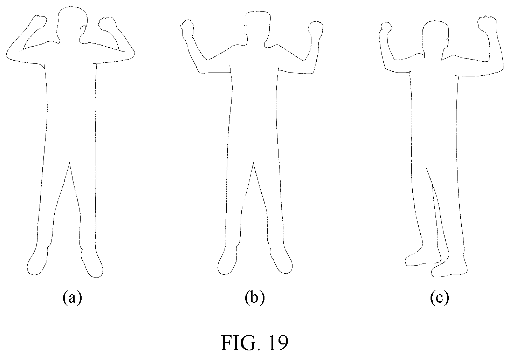

For example, for the specified joining action shown by the electronic device in FIG. 2C, when performing the action, the user may perform a different actual joining action, for example, shown in (a) to (c) in FIG. 19. When a matching degree between the actual joining action and the specified joining action is lower than a preset first threshold (for example, 85%), the electronic device cannot determine the user as the fitness user based on the actual joining action. As a result, the user cannot join fitness, and a success rate of joining fitness by the user by using the specified joining action is low.

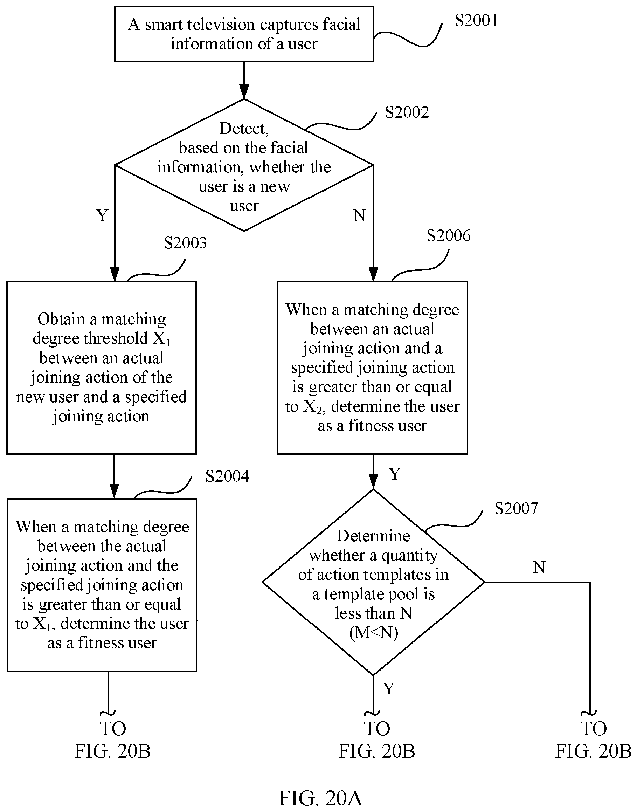

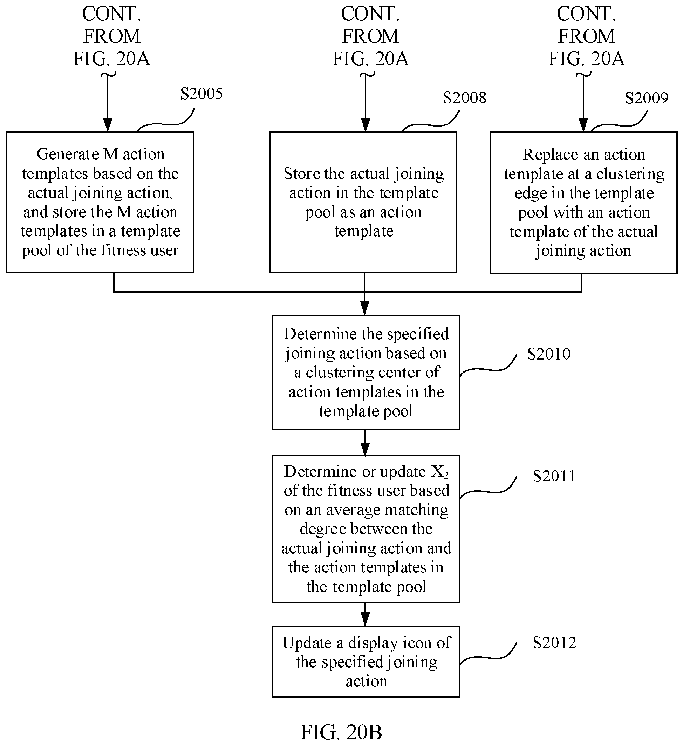

As shown in FIG. 20A and FIG. 20B, the user determining method provided in embodiments of this application may further include the following steps, to improve a success rate of user switching performed by the user by using the specified joining action.

S2001: The electronic device captures facial information of a user.

For each fitness item, after the fitness item is started, the electronic device may capture the facial information of the user by using the camera. In addition, the electronic device continuously recognizes a pose of each user within the shooting range of the camera until the electronic device exits from the AI fitness item.

S2002: The electronic device detects, based on the facial information, whether the user is a new user. For a specific method for detecting a new user, refer to the foregoing descriptions. Details are not described herein again.

If the user is a new user, after S2002, the electronic device performs S2003 to S2005 and S2010 to S2012. If the user is not a new user, after S2002, the electronic device performs S2006 to S2012. Details are as follows:

S2003: If the user is a new user, obtain a matching degree threshold (namely, the first threshold) X₁ between an actual joining action of the new user and the specified joining action.

Generally, a same matching degree threshold X is set by the electronic device for the new user and an existing user, for example, X=85%. The user can join fitness only when a matching degree between an actual joining action of the user and the specified joining action is greater than or equal to 85%. However, when the new user performs user switching for the first time based on the specified joining action, the user may have an inaccurate understanding of the specified joining action, an actual joining action performed by the new user may differ greatly from the specified joining action, resulting in a low success rate of user switching. Therefore, in this embodiment, the matching degree threshold of the new user is set to a small value X₁ , to improve the success rate of user switching performed by the new user. X₁ is a value preset by the electronic device for the new user, and X₁ <X, for example, X₁ =70%.

S2004: When the matching degree between the actual joining action of the user and the specified joining action is greater than or equal to X₁ , the electronic device determines the user as the fitness user.

It should be understood that, after determining the user as the fitness user, the electronic device starts to guide the user to exercise.

S2005: The electronic device generates M action templates based on the actual joining action, and stores the M action templates in a template pool of the fitness user.

Optionally, after determining skeleton point information of the actual joining action, according to a Gaussian noise method, the electronic device may displace a skeleton point in the actual joining action to different degrees, to generate M-1 action templates that are similar to but different from those of the actual joining action. Then, the electronic device may store the actual joining action and action templates together in the template pool (M action templates in total). M is a preset value, for example, M=50.

S2006: If the user is not a new user, when a matching degree between an actual joining action and the specified joining action is greater than or equal to X₂ , the electronic device determines the user as the fitness user.

It should be noted that, each time the user successfully joins, a smart device updates a matching degree threshold of the user, and an updated matching degree threshold is X₂ . For details, refer to S2011. Details are not described herein again.

S2007: The electronic device determines whether a quantity of action templates in a template pool of the fitness user is less than N, where M<N.

In this embodiment, a maximum quantity of action templates accommodated in the template pool is set to N, where M<N, for example, N=100. It should be noted that, generally, some templates in the template pool are action templates corresponding to the actual joining action of the user, and other templates are templates generated by the electronic device according to a Gaussian noise method.

S2008: If the quantity of action templates in the template pool is less than N, the electronic device adds, to the template pool, the action template corresponding to the actual joining action.

In S2008, a quantity of actions actually added by the user to the template pool may be increased. This helps the electronic device learn an understanding of the user for an action.

S2009: If the quantity of action templates in the template pool is equal to N, the electronic device replaces an action template at a clustering edge in the template pool with the action template corresponding to the actual joining action.

Because the action template at the clustering edge in the template pool differs most from an action habit of the user, the electronic device deletes the action template from the template pool, and adds the action template corresponding to the actual joining action.

S2010: The electronic device determines the specified joining action based on a clustering center of action templates in the template pool.

The clustering center of the template pool is closest to the action habit of the user. As the electronic device performs cluster learning on the actual joining action of the user, the specified joining action is closer to the action habit of the user. Therefore, determining a joining action corresponding to the clustering center as the specified joining action helps improve the success rate of user switching. This improves user experience.

S2011: The electronic device determines or updates X₂ of the fitness user based on an average matching degree between the actual joining action and the action templates in the template pool.

For the new user, the electronic device determines X₂ of the user according to S2011. For the existing user, the electronic device updates X₂ of the user according to S2011. It may be understood that, as the specified addition action is closer to the action habit of the user, the matching degree between the actual addition action of the user and the specified addition action is also higher.

It should be noted that S2011 is an optional step, and the electronic device may not increase the matching degree threshold of the user.

S2012: The electronic device updates a display icon of the specified joining action.

Specifically, the electronic device may generate the display icon of the joining action based on a body pose corresponding to the specified joining action. It should be understood that, as the specified joining action becomes closer to the action habit of the user, the displayed icon of the joining action is also closer to the actual joining action of the user.

In the foregoing steps S2001 to S2012, the electronic device can intelligently update the specified joining action and the matching degree threshold of the user, and iteratively learn an understanding of the joining action of the user according to an online machine learning method, to improve the success rate of user switching. This improves user experience.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Based on the foregoing user determining method, the electronic device provided in this embodiment is configured to perform the user determining method according to any one of the foregoing embodiments. After determining the first target user, the electronic device provided in this embodiment of this application can determine the another user as the second target user, and guide a plurality of target users to exercise simultaneously. In addition, joining of the second target user does not affect the first target user. This provides better user experience.

## Claims

1. A user determining method, applied to an electronic device, wherein the method comprises:
displaying a preset first image and a captured second image by the camera of the electronic device in response to a first operation of a user;
determining a first target user (User 1) is a user comprised in the second image, wherein a matching degree between an action of the first target user and an action comprised in the first image meets a first preset condition;
displaying first content related to the first target user, capturing a third image by the camera of the electronic device when displaying the first content related to the first target user;
determining a second target user (User 2) in a user comprised in the third image, wherein a matching degree between an action of the second target user and the action comprised in the first image meets the first preset condition, and the second target user is different from the first target user, wherein a maximum quantity of target users that can be determined by the electronic device is T, and T≥2; and
when displaying the first content, displaying second content related to the second target user,
when a quantity of determined target users is T, if detecting that a (T+1)th user meets the first preset condition, determining a distance between a user image of the (T+1)th user in the third image and a user image of each target user;
skipping displaying content related to a target user closest to the (T+1)th user;
determining the (T+1)th user as a target user; and
displaying content related to the (T+1)th user.

2. The method according to claim 1, wherein the first preset condition is:
an action of a user matches a specified joining action, and matching duration exceeds a preset time period; or
an action sequence of a user matches an action sequence displayed in the first image, and matching duration exceeds a preset time period.

3. The method according to claim 1 or 2, wherein the method further comprises:
when the first target user meets a second preset condition, skipping displaying the first content related to the first target user; or
when the second target user meets a second preset condition, skipping displaying the second content related to the second target user.

4. The method according to claim 3, wherein the second preset condition is:
an action of a target user matches a specified exit action, and matching duration exceeds a preset time period;
static duration of a target user exceeds a preset time period, and an action sequence of the target user does not match the action sequence displayed in the first image; or
a target user is not in the third image for more than a preset time period.

5. The method according to any one of claims 1 to 4, wherein the method further comprises:
displaying query information when the first target user or the second target user meets a third preset condition, wherein the query information queries whether a corresponding target user exits.

6. The method according to claim 5, wherein the third preset condition is that a matching degree between an action of a target user and the action sequence displayed in the first image is less than a threshold for more than a preset time period.

7. The method according to any one of claims 1 to 6, wherein the method further comprises:
determining whether the target user is a new user, and
if the target user is a new user, displaying user switching prompt information, wherein the user switching prompt information comprises a display icon of the specified joining action.

8. The method according to claim 7 , wherein the determining whether the target user is a new user comprises:
capturing facial information of the target user after determining the target user;
searching a facial information base of an application server for the facial information of the target user, wherein the facial information base comprises facial information of a historical target user; and
if the facial information base does not comprise the facial information of the target user, determining the user as a new user, and storing the facial information of the new user into the facial information base.

9. An electronic device, comprising a memory, a processor, and a computer program that is stored in the memory and that can be run on the processor, wherein when the processor executes the computer program, the method according to any one of claims 1 to 8 is implemented.

## Patentansprüche

1. Benutzerbestimmungsverfahren, das auf eine elektronische Vorrichtung angewandt wird, wobei das Verfahren Folgendes umfasst:
Anzeigen eines voreingestellten ersten Bildes und eines erfassten zweiten Bildes durch die Kamera der elektronischen Vorrichtung als Reaktion auf einen ersten Vorgang eines Benutzers;
Bestimmen, dass ein erster Zielbenutzer (Benutzer 1) ein Benutzer ist, der in dem zweiten Bild umfasst ist, wobei ein Übereinstimmungsgrad zwischen einer Handlung des ersten Zielbenutzers und einer Handlung, die in dem ersten Bild umfasst ist, eine erste voreingestellte Bedingung erfüllt;
Anzeigen eines ersten Inhalts, der sich auf den ersten Zielbenutzer bezieht;
Erfassen eines dritten Bildes durch die Kamera der elektronischen Vorrichtung beim Anzeigen des ersten Inhalts, der sich auf den ersten Zielbenutzer bezieht;
Bestimmen eines zweiten Zielbenutzers (Benutzer 2) in einem Benutzer, der in dem dritten Bild umfasst ist, wobei ein Übereinstimmungsgrad zwischen einer Handlung des zweiten Zielbenutzers und der Handlung, die in dem ersten Bild umfasst ist, die erste voreingestellte Bedingung erfüllt und sich der zweite Zielbenutzer von dem ersten Zielbenutzer unterscheidet, wobei eine maximale Anzahl an Zielbenutzern, die durch die elektronische Vorrichtung bestimmt werden kann, T ist und T≥2 ist; und
beim Anzeigen des ersten Inhalts, Anzeigen eines zweiten Inhalts, der sich auf den zweiten Zielbenutzer bezieht,
wenn eine Anzahl an bestimmten Zielbenutzern T ist, falls detektiert wird, dass ein (T+1)-ter Benutzer die erste voreingestellte Bedingung erfüllt, Bestimmen eines Abstands zwischen einem Benutzerbild des (T+1)-ten Benutzers in dem dritten Bild und einem Benutzerbild jedes Zielbenutzers;
Überspringen von Anzeigen eines Inhalts, der sich auf einen Zielbenutzer bezieht, der dem (T+1)-ten Benutzer am nächsten ist;
Bestimmen des (T+1)-ten Benutzers als einen Zielbenutzer; und
Anzeigen eines Inhalts, der sich auf den (T+1)-ten Benutzer bezieht.

2. Verfahren nach Anspruch 1, wobei die erste voreingestellte Bedingung Folgendes ist:
eine Handlung eines Benutzers stimmt mit einer definierten Beitrittshandlung überein und eine Übereinstimmungsdauer überschreitet einen voreingestellten Zeitraum; oder
eine Handlungssequenz eines Benutzers stimmt mit einer Handlungssequenz überein, die in dem ersten Bild angezeigt wird, und eine Übereinstimmungsdauer überschreitet einen voreingestellten Zeitraum.

3. Verfahren nach Anspruch 1 oder 2, wobei das Verfahren ferner Folgendes umfasst:
wenn der erste Zielbenutzer eine zweite voreingestellte Bedingung erfüllt, Überspringen des Anzeigens des ersten Inhalts, der sich auf den ersten Zielbenutzer bezieht; oder
wenn der zweite Zielbenutzer eine zweite voreingestellte Bedingung erfüllt, Überspringen des Anzeigens des zweiten Inhalts, der sich auf den zweiten Zielbenutzer bezieht.

4. Verfahren nach Anspruch 3, wobei die zweite voreingestellte Bedingung Folgendes ist:
eine Handlung eines Zielbenutzers stimmt mit einer definierten Austrittshandlung überein und eine Übereinstimmungsdauer überschreitet einen voreingestellten Zeitraum;
eine statische Dauer eines Zielbenutzers überschreitet einen voreingestellten Zeitraum und eine Handlungssequenz des Zielbenutzers stimmt nicht mit der Handlungssequenz überein, die in dem ersten Bild angezeigt wird; oder
ein Zielbenutzer befindet sich nicht länger als einen voreingestellten Zeitraum in dem dritten Bild.

5. Verfahren nach einem der Ansprüche 1 bis 4, wobei das Verfahren ferner Folgendes umfasst:
Anzeigen von Abfrageinformationen, wenn der erste Zielbenutzer oder der zweite Zielbenutzer eine dritte voreingestellte Bedingung erfüllt, wobei die Abfrageinformationen abfragen, ob ein entsprechender Zielbenutzer existiert.

6. Verfahren nach Anspruch 5, wobei die dritte voreingestellte Bedingung ist, dass ein Übereinstimmungsgrad zwischen einer Handlung eines Zielbenutzers und der Handlungssequenz, die in dem ersten Bild angezeigt wird, länger als einen voreingestellten Zeitraum weniger als ein Schwellenwert ist.

7. Verfahren nach einem der Ansprüche 1 bis 6, wobei das Verfahren ferner Folgendes umfasst:
Bestimmen, ob der Zielbenutzer ein neuer Benutzer ist; und
falls der Zielbenutzer ein neuer Benutzer ist, Anzeigen von Benutzerwechselaufforderungsinformationen, wobei die Benutzerwechselaufforderungsinformationen ein Anzeigepiktogramm der definierten Beitrittshandlung umfassen.

8. Verfahren nach Anspruch 7, wobei das Bestimmen, ob der Zielbenutzer ein neuer Benutzer ist, Folgendes umfasst:
Erfassen von Gesichtsinformationen des Zielbenutzers nach dem Bestimmen des Zielbenutzers;
Durchsuchen einer Gesichtsinformationsbank eines Anwendungsservers nach den Gesichtsinformationen des Zielbenutzers, wobei die Gesichtsinformationsbank Gesichtsinformationen eines historischen Zielbenutzers umfasst; und
falls die Gesichtsinformationsbank die Gesichtsinformationen des Zielbenutzers nicht umfasst, Bestimmen des Benutzers als einen neuen Benutzer und Speichern der Gesichtsinformationen des neuen Benutzers in der Gesichtsinformationsbank.

9. Elektronische Vorrichtung, umfassend einen Speicher, einen Prozessor und ein Computerprogramm, das in dem Speicher gespeichert ist und das auf dem Prozessor laufen kann, wobei, wenn der Prozessor das Computerprogramm ausführt, das Verfahren nach einem der Ansprüche 1 bis 8 umgesetzt wird.

## Revendications

1. Procédé de détermination d'utilisateur, appliqué à un dispositif électronique, dans lequel le procédé comprend :
l'affichage d'une première image prédéfinie et d'une deuxième image capturée par la caméra du dispositif électronique en réponse à une première opération de l'utilisateur ;
la détermination d'un premier utilisateur cible (Utilisateur 1) est un utilisateur compris dans la deuxième image, dans lequel un degré de correspondance entre une action du premier utilisateur cible et une action comprise dans la première image satisfait à une première condition prédéfinie ;
l'affichage du premier contenu relatif au premier utilisateur cible ;
la capture d'une troisième image par la caméra du dispositif électronique lors de l'affichage du premier contenu relatif au premier utilisateur cible ;
la détermination d'un second utilisateur cible (Utilisateur 2) dans un utilisateur compris dans la troisième image, dans lequel un degré de correspondance entre une action du second utilisateur cible et l'action comprise dans la première image satisfait à la première condition prédéfinie, et le second utilisateur cible est différent du premier utilisateur cible, dans lequel le nombre maximal d'utilisateurs cibles pouvant être déterminés par le dispositif électronique est T, et T≥2 ; et
lors de l'affichage du premier contenu, l'affichage du second contenu relatif au second utilisateur cible,
lorsqu'un nombre d'utilisateurs cibles déterminés est T, si l'on détecte qu'un (T+1)ème utilisateur satisfait à la première condition prédéfinie, la détermination d'une distance entre une image utilisateur du (T+1)ème utilisateur dans la troisième image et une image utilisateur de chaque utilisateur cible ;
le fait d'ignorer l'affichage du contenu relatif à un utilisateur cible le plus proche du (T+1)ème utilisateur ;
la détermination du (T+1)ème utilisateur comme utilisateur cible ; et
l'affichage du contenu relatif au (T+1)ème utilisateur.

2. Procédé selon la revendication 1, dans lequel la première condition prédéfinie est :
une action d'un utilisateur correspond à une action d'adhésion spécifiée, et la durée de correspondance dépasse une période de temps prédéfinie ; ou
une séquence d'actions d'un utilisateur correspond à une séquence d'actions affichée dans la première image, et la durée de correspondance dépasse une période de temps prédéfinie.

3. Procédé selon la revendication 1 ou 2, dans lequel le procédé comprend en outre :
lorsque le premier utilisateur cible satisfait à une deuxième condition prédéfinie, le fait d'ignorer l'affichage du premier contenu relatif au premier utilisateur cible ; ou
lorsque le second utilisateur cible satisfait à une deuxième condition prédéfinie, le fait d'ignorer l'affichage du second contenu relatif au second utilisateur cible.

4. Procédé selon la revendication 3, dans lequel la deuxième condition prédéfinie est :
une action d'un utilisateur cible correspond à une action de sortie spécifiée, et la durée de correspondance dépasse une période de temps prédéfinie ;
une durée d'inactivité d'un utilisateur cible dépasse une période de temps prédéfinie, et une séquence d'actions de l'utilisateur cible ne correspond pas à la séquence d'actions affichée dans la première image ; ou
un utilisateur cible n'est pas dans la troisième image pendant plus d'une période de temps prédéfinie.

5. Procédé selon l'une quelconque des revendications 1 à 4, dans lequel le procédé comprend en outre :
l'affichage des informations de demande lorsque le premier utilisateur cible ou le second utilisateur cible satisfait à une troisième condition prédéfinie, dans lequel les informations de demande vérifient si un utilisateur cible correspondant existe.

6. Procédé selon la revendication 5, dans lequel la troisième condition prédéfinie est que le degré de correspondance entre une action d'un utilisateur cible et la séquence d'actions affichée dans la première image soit inférieur à un seuil pendant plus d'une période de temps prédéfinie.

7. Procédé selon l'une quelconque des revendications 1 à 6, dans lequel le procédé comprend en outre :
le fait de déterminer si l'utilisateur cible est un nouvel utilisateur ; et
si l'utilisateur cible est un nouvel utilisateur, l'affichage des informations d'invite de changement d'utilisateur, dans lequel les informations d'invite de changement d'utilisateur comprennent une icône d'affichage de l'action d'adhésion spécifiée.

8. Procédé selon la revendication 7, dans lequel le fait de déterminer si l'utilisateur cible est un nouvel utilisateur comprend :
la capture des informations faciales de l'utilisateur cible après la détermination de l'utilisateur cible ;
la recherche dans une base de données d'informations faciales d'un serveur d'application les informations faciales de l'utilisateur cible, dans lequel la base de données d'informations comprend les informations faciales d'un utilisateur cible historique ; et
si la base de données d'informations faciales ne comprend pas les informations faciales de l'utilisateur cible, la détermination de l'utilisateur comme nouvel utilisateur et le stockage des informations faciales du nouvel utilisateur dans la base de données d'informations faciales.

9. Dispositif électronique, comprenant une mémoire, un processeur, et un programme informatique qui est stocké dans la mémoire et qui peut fonctionner sur le processeur, dans lequel lorsque le processeur exécute le programme informatique, le procédé selon l'une quelconque des revendications 1 à 8 est mis en œuvre.
